# FASCICULE DE BREVET EUROPEEN

(11) **EP 2 791 441 B1**
(45) Date de publication et mention de la délivrance du brevet: **14.08.2019**
(21) Numéro de dépôt: 12813919.3
(22) Date de dépôt: 13.12.2012
(51) Int. Cl.: E04F 13/08, E04B 1/76, E04B 1/80

(54) **SYSTÈME D'ISOLATION THERMIQUE ET PROCÉDÉ D'ASSEMBLAGE ASSOCIÉ**
WÄRMEDÄMMSYSTEM UND ENTSPRECHENDES MONTAGEVERFAHREN
HEAT INSULATION SYSTEM, AND RELATED ASSEMBLY METHOD

(30) Priorité: 14.12.2011 FR 1161648
(43) Date de publication de la demande: 22.10.2014
(73) Titulaire: Electricité de France, 75008 Paris (FR)
(72) Inventeur: JALLON, Paul, F-33000 Bordeaux (FR); HOUVENAGHEL, Geert, F-27400 Heudreville Sur Eure (FR); BLANC, Christophe, F-30400 Villeneuve Les Avignon (FR); BOURBON, Lionel Brice, F-84510 Caumont Sur Durance (FR); MILLEVILLE, Pierre-Henri, F-77670 Vernou La Celle (FR); DUFORESTEL, Thierry, F-77250 Moret Sur Loing (FR); YRIEIX, Bernard, F-77250 Moret Sur Loing (FR); COLMET DAAGE, Mathilde, F-77300 Fontainebleau (FR)
(74) Mandataire: Cabinet Plasseraud
(86) Numéro de dépôt international: PCT/FR2012/052917
(87) Numéro de publication internationale: WO 2013/088077

(56) Documents cités:
- EP-A1- 2 395 169
- WO-A2-2010/139681
- DE-A1- 10 324 351
- NL-C1- 1 009 540
- US-A1- 2006 265 988

## Description

La présente invention concerne, dans le domaine du bâtiment, les systèmes d'isolation thermique qui incorporent une couche isolante thermiquement formée de panneaux élémentaires de type PIV (panneau isolant sous vide) et au moins un parement typiquement rigide et sensiblement plan. L'invention concerne également un procédé de fabrication d'un tel système. DE 103 24 351, US 2006/265988, WO 2010/139681, EP 2 395 169 et NL 1 009 540 traitent de ce sujet.

Les panneaux élémentaires de type PIV comprennent de façon connue en soi un matériau de coeur poreux isolant (par exemple) à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable. Ces panneaux forment des plaques d'épaisseur sensiblement constante et présentent de grandes tailles, par exemple 600 mm de largeur et 1200 mm de longueur (d'autres largeur, par exemple de 300 mm, 400, 500 jusqu'à à 1200 mm étant bien entendu disponibles, la longueur variant généralement entre 500 et 2000 mm). La taille de ces panneaux conviendrait donc pour le recouvrement de parois de bâtiments à des fins d'isolation thermique. De plus, la performance thermique de ces panneaux élémentaires conduit à des épaisseurs qui peuvent être réduites pour minimiser l'encombrement du système d'isolation thermique, l'épaisseur d'un panneau pouvant être inférieure à 60 mm, et de préférence inférieure à 35 mm.

Dans le domaine, on qualifie de super isolants thermiques des matériaux présentant, à température ambiante, un niveau de conductivité thermique inférieure à 25 mW m⁻¹ K⁻¹. Les panneaux PIV ont une conductivité thermique inférieure à 7 mW m⁻¹ K⁻¹, et plus préférentiellement inférieure à 5 mW m⁻¹ K⁻¹.

L'utilisation de tels panneaux élémentaires pour réaliser une installation d'isolation thermique pour bâtiment présente cependant les inconvénients suivants :
- l'enveloppe barrière très mince est fragile vis-à-vis de risques de perforations générés par le contact de surfaces rigides ou à angles vifs,
- si le panneau sous vide super isolant thermique réalisé avec cette enveloppe présente une bonne rigidité apparente, il tolère peu d'efforts de compression ou de flexion qui sont susceptibles, outre de le déformer, de dégrader les propriétés de barrière au gaz des panneaux et qui garantissent la haute performance thermique,
- la taille relativement importante des panneaux et leur très faible conductivité thermique sont des atouts de performance d'isolation thermique très importants qui peuvent toutefois être considérablement réduits si l'écartement entre deux panneaux adjacents est trop important (problématique des ponts thermiques) et/ou si de l'air peut circuler au niveau des jonctions (problématique associée d'étanchéité à l'air des isolants thermiques de parois de bâtiments).

Un perçage de l'enveloppe barrière aussi minime soit-il provoque la perte du vide à l'intérieur de l'enveloppe conduisant à une baisse très significative des performances thermiques des panneaux, la conductivité thermique pouvant alors augmenter d'un facteur trois ou quatre, voire au-delà si de la vapeur d'eau pénètre également dans l'enveloppe (de l'ordre de 20 mW m⁻¹ K⁻¹ ou plus au lieu de 5 à 7 mW m⁻¹ K⁻¹ pour un panneau isolant sous vide intact).

Il est connu des solutions utilisant de la mousse (éventuellement renforcée avec de la fibre de verre), du plastique ou des matières composites pour assurer une protection mécanique de ces panneaux élémentaires super-isolants. Par exemple, le document US 5897932 montre des dalles composites qui présentent chacune un panneau PIV et un cadre externe formé de plusieurs éléments. Le cadre protège les bords de l'enveloppe barrière du panneau PIV. Les dalles de ce type peuvent être vissées l'une à l'autre dans une zone de jonction formée, à distance de l'enveloppe barrière. Parmi les inconvénients de ces dalles, on peut noter que les éléments du cadre augmentent l'encombrement et tendent à réduire l'efficacité de l'intégration et de l'isolation thermique (écartement important entre deux panneaux adjacents conduisant à de très importants ponts thermiques). De plus, le coût de fabrication est significativement plus élevé qu'un panneau élémentaire PIV. Pour ces raisons, de telles dalles sont essentiellement utilisées sur de petites surfaces, typiquement dans l'enceinte d'un réfrigérateur. De telles dalles sont en outre assez peu structurelles et on comprend qu'elles ne sont guère plus adaptées que les panneaux élémentaires PIV dans le cadre d'une isolation thermique pour bâtiment.

Il existe donc un besoin pour des systèmes d'isolation thermique de parois, notamment pour des applications de contrecloison d'isolation thermique de grande surface dans un bâtiment, qui soient aisées à installer et qui présentent une efficacité globale comparable à l'efficacité des panneaux élémentaires de type PIV.

La présente invention a notamment pour but de pallier tout ou partie des inconvénients précités.

A cet effet, il est proposé selon l'invention un système d'isolation thermique destinée à former ou recouvrir une paroi d'un bâtiment, tel que défini par la revendication 1. Ce système comporte:
- des panneaux isolants sous vide ayant chacun une forme de plaque avec quatre côtés dont deux côtés opposés parallèles, chacun des panneaux comprenant un matériau poreux résistant à la compression et une enveloppe barrière étanche aux gaz (enveloppe typiquement souple), fermée sous vide, qui renferme le matériau poreux, les panneaux étant répartis en au moins une couche de panneaux en formant des rangées de panneaux ; et
- une ossature pour fixer les panneaux dans ladite couche, de sorte que ladite couche présente une face dite avant du côté d'un parement externe et une face dite arrière opposée à la face avant, l'ossature comprenant une pluralité de profilés rigides parallèles aux rangées et structurant la couche, qui permettent de border deux côtés parallèles des panneaux dans les rangées ;
   dans lequel les panneaux sont maintenus dans les rangées en s'insérant dans une paire de rails définis par les profilés, chacun des profilés ayant une conductivité thermique inférieure ou égale à 0,6 W m⁻¹ K⁻¹ et de préférence inférieure à 0,25 W m⁻¹ K⁻¹ et comprenant :
   - une base d'appui sensiblement parallèle à la direction générale définie par les rangées, en contact avec une tranche d'au moins un des panneaux (contact direct avec l'enveloppe barrière) ;
   - au moins une cavité de fixation d'un panneau, ladite cavité étant délimitée entre une branche avant de recouvrement d'une face avant de panneau et une branche arrière de recouvrement de face arrière de panneau, lesdites branches avant et arrière s'étendant du même côté depuis la base ;
et dans lequel l'ossature comprend :
- des moyens de fixation rigide en contact avec au moins un substrat du bâtiment,
- des dispositifs d'appui rigides, ayant de préférence une direction d'allongement horizontale, qui présentent au moins deux faces d'appui, les deux faces d'appui étant de préférence parallèles et situées à des extrémités opposées du système (par exemple extrémités inférieure et supérieure), pour supporter le parement externe, les dispositifs d'appui comprenant des éléments d'écartement s'étendant de manière transversale par rapport aux panneaux et à distance des panneaux pour définir un premier espace entre ladite face avant et le parement externe,
les dispositifs d'appui rigides et les moyens de fixation sont répartis dans deux extrémités opposées de l'ossature, destinés à être raccordés à un substrat du bâtiment à chacune desdites deux extrémités opposées, en étant raccordés à un substrat du bâtiment à chacune des deux extrémités opposées, ce grâce à quoi chacun des dispositifs d'appui est agencé de façon intermédiaire entre un substrat du bâtiment et un profilé et lesdits dispositifs d'appui permettent de définir un espacement entre ladite au moins une couche de panneaux et ladite paroi du bâtiment,
les panneaux sont maintenus dans les rangées en s'insérant dans une paire de rails définis par les profilés et distants de ladite paroi,
les faces d'appui des dispositifs d'appui définissent des supports frontaux pour la fixation du parement externe, chacune des faces d'appui étant définie par une branche d'un profilé additionnel directement fixé avec un des profilés structurant la couche de panneaux, le profilé additionnel comprenant une base qui forme un des éléments d'écartement entre le parement externe et les panneaux,
un profilé du bas peut se fixer par clipsage sur l'un des bords verticaux d'un profilé formant dispositif d'appui.

Grâce à ces dispositions, des panneaux élémentaires à base de super isolant sous vide de type standard (avec une enveloppe barrière fragile) peuvent être mis en oeuvre sans protection embarquée, simplement par fixation des panneaux sur des profilés qui forment l'ossature support de parement. Les profilés intégrés dans la couche (de préférence une couche unique) sont en matière isolante thermiquement, par exemple matière plastique ou polymère (comme par exemple les PVC ou polyamides, polyamides chargés, PEBD, PEHD, PP, PET ou composite (comme par exemple ceux à base de fibre de verre)) avec une faible épaisseur (par exemple inférieure a 5 mm, préférentiellement inférieure à 2 mm), et peuvent envelopper de manière étanche à l'air les bords des panneaux élémentaires. On cumule donc, avec cette technique de construction, les avantages de fabrication au préalable des panneaux en usine (ce qui facilite le montage sur chantier du système), de réduction de la durée du chantier, de précision sur les dimensions (typiquement de l'ordre du millimètre) tout en garantissant une performance thermique optimale en limitant les inconvénients liés à la mise en oeuvre de panneaux élémentaires PIV de fabrication standard. En utilisant une telle ossature, on obtient un gain de temps pour l'assemblage et une réduction de coût liée à l'utilisation de panneaux de fabrication standard.

L'agencement de l'ossature permet de former une couche à base de panneaux PIV (en association avec les profilés) qui est non seulement simple à assembler *in situ,* mais aussi qui présente une continuité en terme d'isolation thermique et d'étanchéité à l'air de la paroi isolée, en réduisant toute circulation d'air entre les faces avant et arrière de la couche de panneaux.

Du fait de la faible épaisseur des profilés et de la faculté de sélectionner différentes tailles disponibles pour les panneaux PIV, on peut considérer que les panneaux de la couche s'étendent sur une surface sensiblement égale à la totalité de la surface de la cloison d'isolation, avec une réduction significative des pertes liées aux phénomènes de ponts thermiques périphériques et d'étanchéité à l'air entre les panneaux élémentaires adjacents. Autrement dit, la performance globale d'isolation de la couche de panneaux peut avantageusement être très proche de la performance mesurée pour un panneau élémentaire.

On comprend également que le fait de prévoir des profilés facilite non seulement les opérations de montage sur place mais également les opérations de démontage lorsque le parement est retiré. Ainsi, les panneaux élémentaires peuvent être récupérés après un tel démontage. Les profilés réalisés d'un seul tenant permettent de recouvrir la tranche d'un panneau, voire la tranche de deux panneaux pour des profilés à section en H agencés entre deux rangées, et permettent d'établir des liaisons directes avec les appuis de l'ossature, ce qui minimise avantageusement le nombre de pièces.

L'utilisation des dispositifs d'appui pour la fixation au bâtiment, à deux extrémités opposées de l'ossature, permet une adaptation à divers types de parois, même avec de fortes irrégularités. Les panneaux sont maintenus écartés de la paroi en vis-à-vis du fait que l'ensemble de couche (structurée par les profilés) est supportée par l'intermédiaire des dispositifs d'appui. Il est permis le cas échéant de supprimer tout ancrage frontal contre la paroi en vis-à-vis, ce qui supprime l'inconvénient de profilés non correctement alignés dans un même plan lorsque la paroi n'est pas du tout plane. On comprend aussi qu'un meilleur alignement des panneaux peut être obtenu en réalisant l'ancrage aux extrémités de l'ossature. Cela permet de mieux ajuster les panneaux PIV dans les profilés (avec contact de la tranche contre la base du profilé) sans exercer de contrainte de torsion.

Dans divers modes de réalisation du système selon l'invention, on peut éventuellement avoir recours en outre à l'une et/ou à l'autre des dispositions suivantes :
- les dispositifs d'appui rigides comprennent des rails qui sont agencés dans le prolongement direct des profilés selon une direction perpendiculaire à la couche de panneaux et s'étendent parallèlement aux profilés ;
- les panneaux PIV élémentaires présentent chacun une même épaisseur, laquelle est typiquement environ 10 fois plus grande que l'épaisseur de la base des profilés (le ratio entre ces deux épaisseurs pouvant plus généralement varier de 30 :1 à 10 :3 par exemple) ;
- les profilés sont en plastique, en particulier en polymères, de préférence un polymère extrudé ou moulé, ou en composite de sorte que la couche de panneaux PIV ne comprend pas de structure métallique dont le montage est complexe (les profilés de type plastique sont ici simples à monter et les profilés inférieurs et supérieurs peuvent être fixés à des rails de doublure par un système d'éclisse ou fixation rapide similaire) ;

- les profilés ont leur(s) cavité(s) qui présente(nt) une largeur légèrement inférieure à l'épaisseur des panneaux pour permettre une fixation par emboitement ou glissement serré des panneaux dans la cavité qui aura alors (après la fixation) la même épaisseur entre branches que les panneaux mis en place (cette disposition permet d'assurer une étanchéité à l'air sans élément d'étanchéité additionnel à fixer sur l'enveloppe barrière ; ainsi avec une ossature relativement simple à monter, on obtient une étanchéité du système à l'air qui est performante et qui ne se dégrade pas dans le temps, de sorte que la performance thermique globale du système peut être garantie sur plusieurs dizaines d'années) ;
- les cavités associées à au moins une rangée déterminée comprennent chacune des moyens élastiquement déformables pour serrer les panneaux de la rangée déterminée, les moyens élastiquement déformables présentant de préférence une surface biseautée ou convexe en contact avec les panneaux de la rangée déterminée (cette disposition permet de réaliser l'étanchéité à l'air typiquement par déformation élastique d'une branche du profilé et sans appui forcé, de sorte que le panneau élémentaire peut conserver son intégrité, en particulier sans que l'enveloppe barrière soit dégradée lors de la mise en place par emboitement) ;
- le serrage peut résulter d'une différence d'environ 1 à 4 mm entre l'épaisseur du panneau et la largeur de la cavité associée ;
- les moyens élastiquement déformables comprennent un bourrelet en mousse formé sur une face interne de l'un et/ou l'autre desdites branches avant et arrière ;
- les moyens élastiquement déformables comprennent une mousse compressible qui est fixée sur tout ou partie de la base et sur une face interne de l'un et/ou l'autre des branches avant et arrière associées, l'épaisseur de la base étant de préférence inférieure ou égale à 4 mm (un avantage de la mousse est de pouvoir serrer le panneau élémentaire sans le moindre risque de blesser la surface de ce dernier) ;
- l'ossature comprend des éléments structurels, de préférence des montants qui s'étendent entre une extrémité inférieure et une extrémité supérieure du système, pour maintenir l'ossature à distance d'une paroi du bâtiment, un deuxième espace s'étendant le long de ladite face arrière de la couche de panneaux, tout ou partie des profilés et/ou des dispositifs d'appui étant fixés aux éléments structurels (ainsi on peut obtenir une lame d'air à l'arrière de la couche, ce qui permet par cette distance de rattraper les variations dimensionnelles de planéité de la paroi à isoler et une adaptation aux points singuliers haut et bas de paroi et aux éventuels embrasements de menuiserie, et limite en outre le risque de détérioration de la face arrière des panneaux) ;
- les éléments structurels, agencés verticalement, forment également des appuis pour le parement externe ;
- l'ossature présente des moyens de fixation rigide répartis dans deux extrémités opposées de l'ossature, l'un des dispositifs d'appui et/ou les éléments structurels étant raccordés à un premier substrat du bâtiment, de préférence un plancher, par des premiers éléments des moyens de fixation, et un autre des dispositifs d'appui et/ou les éléments structurels étant raccordés à un deuxième substrat du bâtiment, de préférence un plafond, par des deuxièmes éléments des moyens de fixation ;
- le système comprend une couche de matériau anti-perforation à partir de la face de parement, rigide ou de préférence à base de fibres ou tissu textile ou similaire et d'épaisseur inférieure à l'épaisseur des panneaux PIV, qui s'étend dans le premier espace, le long du parement externe (cette disposition est avantageuse pour conserver l'intégrité de l'enveloppe des panneaux isolants sous vide lors d'interventions ultérieures par perçage, vissage, fixation d'éléments ou opération similaire sur le parement externe, en particulier lorsque le parement externe est proche de la couche de panneaux) ;
- la distance entre la paroi de bâtiment derrière les panneaux PIV et la face extérieure du parement externe varie ainsi en fonction des épaisseurs des panneaux, de l'espace entre la paroi et la couche de panneaux, de l'espace entre cette couche et le parement et enfin de l'épaisseur du parement, cette distance étant comprise de préférence entre 30 mm et 100 mm, en restant de préférence inférieure à 70 mm (les espaces formant lames d'air étant alors minimisés), et plus préférentiellement en dessous de 50 mm (on minimise ainsi l'encombrement du système, notamment en réduisant l'épaisseur des lames d'air de part et d'autre de la couche de panneaux PIV).
- dans des profilés déterminés associés à une même rangée, qui sont de préférence des profilés associés à la rangée supérieure, il est prévu une cavité qui débouche du côté avant ou arrière à une hauteur très faible de la base correspondante, la hauteur très faible étant de préférence inférieure ou égale à 8 mm (cet agencement permet une insertion des panneaux de la dernière rangée en biais de façon à obtenir un minimum de jeu dans les cavités des profilés) ;
- les profilés comprennent :
   i) des premiers profilés situés à une extrémité inférieure du système et dont la cavité est délimitée par une section en U en coupe transversale, adaptée pour partiellement envelopper des panneaux de la rangée inférieure ;
   ii) des deuxièmes profilés situés à une extrémité supérieure du système et dont la cavité est délimité par une section en U en coupe transversale, adaptée pour partiellement envelopper des panneaux de la rangée supérieure ; et
   iii) lesdits profilés déterminés qui définissent des troisièmes profilés agencés entre la rangée supérieure et une rangée adjacente, et qui comprennent d'une part une cavité délimitée par une section en U adaptée pour partiellement envelopper des panneaux de la rangée adjacente à la rangée supérieure, et d'autre part une cavité qui débouche du côté avant ;
- la base des profilés a une épaisseur comprise entre 0,1 et 3 mm, les panneaux de ladite couche définissant une surface sensiblement égale à la totalité de la surface du système d'isolation (ainsi on limite l'écartement entre les panneaux élémentaires adjacents à une distance typiquement de l'ordre de 1 mm ou moins et les pertes par des ponts thermiques sont ainsi significativement réduites ;
- au moins au niveau d'une rangée de panneaux parallélépipédiques de la couche, l'ossature comprend des profilés à section en H en coupe transversale (de longueur verticale inférieure à celle des panneaux pour permettre la mise en place des profilés structurant la couche), ces profilés à section en H formant une jonction entre deux panneaux adjacents d'une même rangée avec un serrage sur les panneaux (ainsi on s'assure de la continuité de l'isolation au sein d'une même rangée de panneaux)

Par ailleurs, l'invention a également pour objet un procédé d'assemblage d'un système d'isolation thermique pour bâtiment, par exemple un élément mural, tel que défini par la revendication 13. Dans ce procédé, on fixe sur des profilés structurels une pluralité de panneaux isolants ayant chacun une forme de plaque avec quatre côtés dont deux côtés opposés parallèles, chacun des panneaux de ladite pluralité comprenant un matériau poreux résistant à la compression et une enveloppe barrière étanche aux gaz, fermée sous vide, qui renferme le matériau poreux, le procédé comprenant les étapes consistant essentiellement à :
- fixer au moins un premier profilé à un substrat du bâtiment (directement ou indirectement, typiquement sur un plancher du bâtiment) pour former une première extrémité fixe du système, et de préférence une extrémité inférieure ;
- fixer au moins un deuxième profilé à un substrat du bâtiment (directement ou indirectement, typiquement sur un plafond du bâtiment) pour former une deuxième extrémité fixe du système opposée à la première extrémité fixe, et de préférence une extrémité supérieure ;
- former des rangées successives et jointives des panneaux PIV de façon à former une couche de panneaux, par utilisation des premier et deuxième profilés et d'au moins un profilé intermédiaire parallèle aux premier et deuxième profilés, - fixer de manière serrée dans des cavités des profilés des côtés des panneau, lors de la formation de chacune des rangées, de sorte que des panneaux de deux rangées adjacentes sont seulement séparés par l'épaisseur du profilé qui présente une conductivité thermique inférieure ou égale à 0,6 W m⁻¹ K⁻¹ et de préférence inférieure à 0,25
   W m⁻¹ K⁻¹ ;
- fixer la couche à des dispositifs d'appui rigides uniquement par l'intermédiaire des premier et deuxième profilés, de façon à définir une ossature du système, les dispositifs d'appui rigides étant répartis dans deux extrémités opposées de l'ossature et fixés à un substrat du bâtiment, ce grâce à quoi les dispositifs d'appui rigides sont placés de façon intermédiaire entre un substrat du bâtiment et lesdits premier et deuxième profilés et permettent de définir un espacement entre ladite couche de panneaux et une paroi du bâtiment recouverte par le système d'isolation thermique, un profilé du bas se fixant par clipsage sur l'un des bords verticaux d'un profilé formant dispositif d'appui ; et
- fixer, sur au moins deux faces d'appui des dispositifs d'appui, un parement externe parallèlement à la couche de panneaux, de façon à définir un espace entre le parement externe et ladite face avant, chacune des faces d'appui des dispositifs d'appui étant définie par une branche d'un profilé additionnel directement fixé avec un des profilés structurant la couche de panneaux, le profilé additionnel comprenant une base qui forme un des éléments d'écartement entre le parement externe et les panneaux.Ainsi, l'installation des panneaux PIV est aisée, par simple engagement dans une cavité (gorge) d'un profilé qui fait partie de l'ossature de l'élément mural. Les profilés ont à la fois une fonction de maintien structurel par une fonction de reprise d'efforts d'appui exercés sur le parement externe du fait de leur raccordement avec les dispositifs d'appui rigides mais aussi d'étanchéité à l'air extérieur par le serrage des panneaux PIV sur leurs extrémités tout en garantissant l'intégrité de l'enveloppe des panneaux PIV. On comprend que la matière isolante reste avantageusement intègre lors du montage et lorsque des efforts s'exercent sur le parement externe, alors que les panneaux PIV sont très rapprochés les uns des autres (la couche isolante est alors définie essentiellement par les panneaux PIV, les espaces intercalaires qui correspondent à l'épaisseur de la base d'un profilé étant très faible donc l'impact thermique est minimisé). De plus, l'élément mural peut être construit avec une faible épaisseur, même avec une paroi de bâtiment ayant une surface très irrégulière.

Selon une particularité, le premier profilé étant utilisé pour la formation d'une rangée inférieure formée avant les autres rangées et le deuxième profilé étant utilisé pour la formation d'une rangée supérieure, on prévoit pour la formation des rangées :
- au moins pour former la rangée inférieure, une insertion de panneaux de ladite pluralité dans une première paire de rails définis par les profilés, l'un parmi le rail supérieur et le rail inférieur de la première paire de rails, de préférence le rail supérieur, étant monté après insertion d'au moins un panneau PIV dans l'autre rail de ladite première paire, puis
- pour former une dernière rangée de panneaux, une insertion de panneaux dans l'un puis l'autre rail d'une deuxième paire de rails définis par les profilés, les rails de ladite deuxième paire étant montés dans la structure avant les panneaux de la dernière rangée.

Ce type d'assemblage peut être rapide et on évite avantageusement de visser ou insérer d'une autre manière des pièces au travers de la couche isolante pour réaliser son maintien, ce qui ruinerait la performance de ce type d'isolant sous vide en panneaux standards. De plus la fixation sur le parement externe peut se faire par un simple collage sur les faces d'appui des dispositifs d'appui, pour éviter de percer le parement externe.

Selon une autre particularité, lorsque les panneaux sont de forme rectangulaire (format parallélépipédique) on insère des profilés à section en H en coupe transversale entre deux panneaux adjacents d'une même rangée, de façon à former des jonctions verticales entre les panneaux adjacents d'une rangée. Ainsi on peut aussi s'assurer qu'il y a une continuité de la couche isolante au niveau des rangées, les deux cavités définies par le profilé en H pouvant enserrer les côtés des panneaux PIV. On comprend que l'agencement croisé des profilés peut permettre de réaliser des appuis intermédiaires avec une répartition des efforts autour des panneaux PIV, et de préférence aux extrémités de la couche isolante et/ou au niveau du croisement des profilés ; cette disposition renforce très avantageusement l'étanchéité à l'air globale de toute la cloison isolante ainsi réalisée.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en perspective représentant une première forme de réalisation particulière d'un système d'isolation thermique selon l'invention ;
- la figure 2 montre, selon une coupe horizontale, une variante de la première forme de réalisation de la figure 1 au niveau d'un angle ;
- la figure 3A montre un détail de la première forme de réalisation de la figure 1 au niveau de l'extrémité inférieure du système d'isolation thermique ;
- les figures 3B, 3C et 3D montrent respectivement des variantes du profilé montré sur la figure 3A pour l'insertion d'un panneau PIV ;
- la figure 4A montre une vue en coupe verticale d'un profilé pouvant être utilisé entre deux rangées de panneaux PIV dans le système d'isolation thermique selon l'invention ;
- la figure 4B montre une vue en coupe verticale d'un profilé pouvant être utilisé pour mettre en place l'avant-dernière et la dernière rangées de panneaux PIV dans le système d'isolation thermique selon l'invention ;
- les figures 5A et 6A sont respectivement des vues en coupe verticale de variantes du profilé de la figure 4A, de tels profilés pouvant être utilisés entre deux rangées de panneaux PIV dans le système d'isolation thermique selon l'invention ;
- les figures 5B et 6B sont respectivement des vues en coupe verticale de variantes du profilé de la figure 4B, de tels profilés pouvant être utilisés pour mettre en place l'avant-dernière et la dernière rangées de panneaux PIV dans le système d'isolation thermique selon l'invention ;
- les figures 7A et 7B sont des vues en coupe verticale qui illustrent le montage des panneaux PIV dans l'avant-dernière et la dernière rangées ;
- la figure 8A montre une vue en coupe verticale d'un système d'isolation thermique utilisant des dispositifs d'entretoisement;
- la figure 8B montre un détail de la figure 8A, illustrant un exemple de dispositif d'entretoisement pour le maintien des panneaux PIV ;
- la figure 9A est une vue en coupe transversale horizontale qui illustre la fixation d'une extrémité d'un dispositif d'entretoisement ;
- la figure 9B illustre schématiquement l'agencement d'un dispositif d'entretoisement à la jonction entre quatre panneaux PIV ;
- la figure 10 est une vue en perspective montrant une équerre d'angle utilisée pour le raccordement de deux couches de panneaux PIV agencés à sensiblement 90° ;
- la figure 11A est une vue de dessus d'un élément support formant une première extrémité axiale du dispositif d'entretoisement;
- la figure 11B est une vue de face de l'élément support de la figure 11A ;
- la figure 12 est une vue en perspective qui montre un élément support formant une extrémité axiale du dispositif d'entretoisement;
- la figure 13A est une vue de côté d'une tige d'entretoisement utilisée dans un dispositif d'entretoisement ;
- la figure 13B est une vue de côté d'un élément de raccordement formant une extrémité axiale d'un dispositif d'entretoisement;
- la figure 14 montre un élément étoilé adapté pour s'intercaler entre les coins des panneaux PIV.

Sur les différentes figures, les mêmes références désignent des éléments identiques ou similaires.

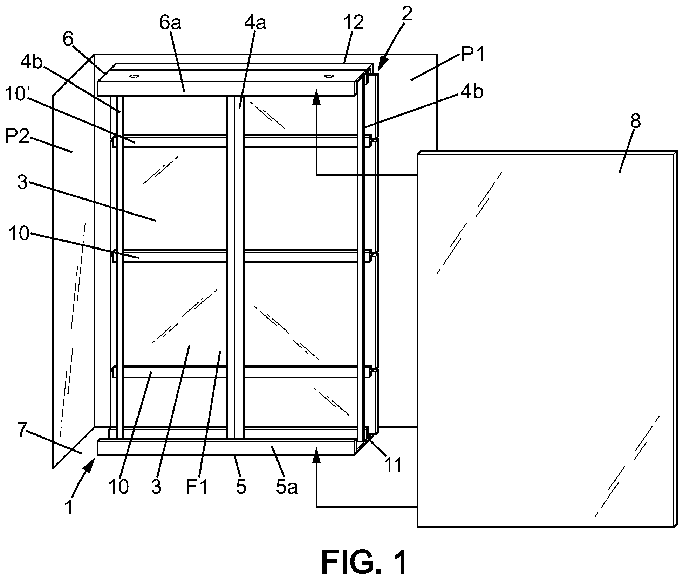

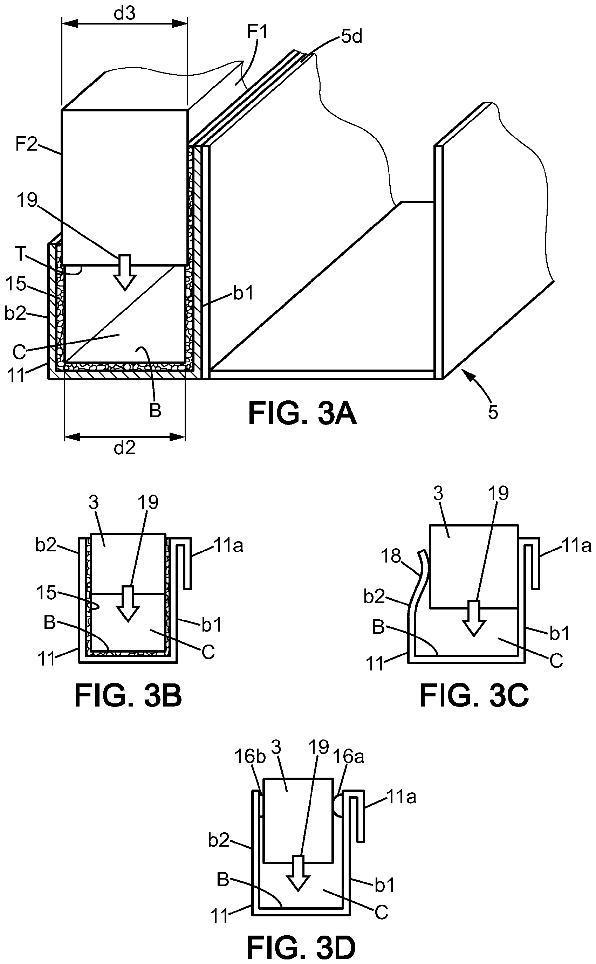

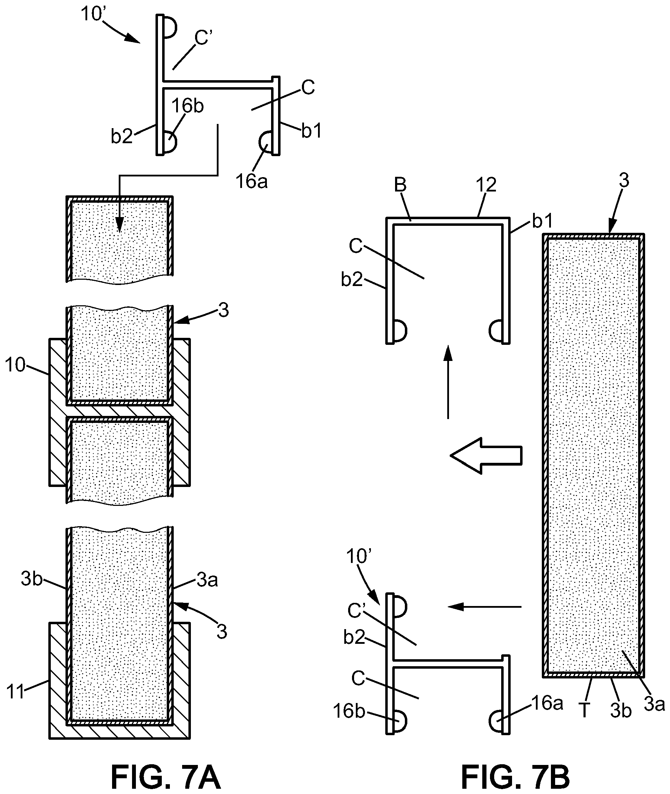

L'invention concerne un système d'isolation thermique 1 dont une forme de réalisation particulière est bien visible sur la figure 1. Le système d'isolation thermique 1 présente une ossature 2 et plusieurs panneaux 3 de type PIV standards sans protection mécanique associée ayant chacun un format parallélépipédique avec la même épaisseur (cette épaisseur étant typiquement la plus petite des dimensions des panneaux 3). Les panneaux 3 sont montés sur l'ossature 2 et répartis dans une couche qui présente plusieurs rangées de panneaux 3 de même largeur. Cette couche présente une face avant F1 bien visible sur la figure 1 et une face arrière F2 (figure 3A) opposée à la face avant F1. De façon connue en soi et comme montré sur les figures 7A-7B, l'âme isolante 3a, poreuse, du panneau 3 est mise sous vide et enfermée dans l'enveloppe barrière étanche 3b qui est de préférence souple.

L'ossature 2 comprend ici :
- des dispositifs structurels rigides 4a, 4b, 5, 6 fixés directement ou indirectement sur au moins un substrat du bâtiment tel que par exemple un plancher 7 et un plafond (non représenté sur la figure 1), et agencés entre un parement externe 8 du système 1 et au moins une paroi P1, P2 du bâtiment ; et
- des profilés 10, 10', 11 et 12, ici agencés horizontalement, qui permettent de border deux côtés parallèles des panneaux 3 dans les rangées de panneaux 3 et qui présentent une rigidité suffisante pour résister à des efforts de torsion.

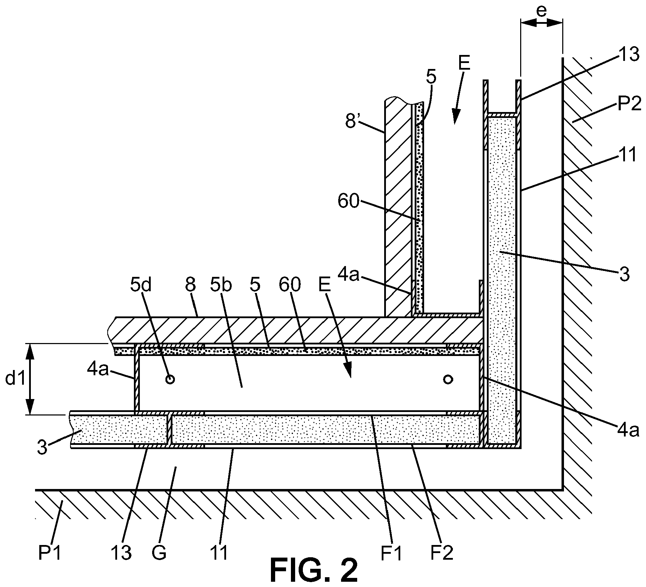

Dans l'exemple non limitatif de la figure 1, l'ossature 2 peut s'étendre à distance de la paroi P1 et de la paroi P2, aucune fixation sur ces parois P1, P2 n'étant requise. Les dispositifs structurels rigides 4a, 5, 6 sont ici des profilés, de préférence métalliques, ayant une section en U en coupe transversale (ou éventuellement en L pour le profilé 4a, comme visible sur la figure 2). Les profilés 4a s'étendent verticalement entre les profilés d'appui 5 du bas et les profilés d'appui 6 du haut de l'ossature 2 et s'étendent en profondeur entre le parement externe 8 et la couche de panneaux 3 de type PIV. Ce positionnement décalé vers l'avant par rapport à la couche de panneaux 3 est permis par l'agencement des profilés 5 et 6 qui forment des supports sensiblement horizontaux qui maintiennent la verticalité des profilés 4a ou d'autres éléments rigides analogues. Les profilés 5 et 6 dont la direction d'allongement est horizontale ont une forme de U qui permet de recevoir, entre les branches du U, les profilés 4a ou montants similaires dont la direction d'allongement est verticale. Ces montants sont par exemple espacés de 30 à 90 cm et forment ainsi un bon support de fixation du parement externe 8. La géométrie des profilés 4a, 5 et 6 dépend bien entendu de la distance d1 voulue entre le parement 8 et la couche de panneaux 3 de type PIV, et de la hauteur de l'ouvrage fini. Dans les profilés 4a, les branches ont par exemple une extension depuis la base comprise entre 30 mm et 90 mm, l'usage (en France) voulant qu'elle soit typiquement de 48 mm. Les profilés 4a, 5 et 6 de l'ossature 2 sont ici métalliques avec une épaisseur de 0,3 à 1 mm, préférentiellement d'environ 0,6 mm.

On peut voir sur les figures 1 et 3A que le profilé d'appui 5 est accolé contre la branche avant d'un profilé inférieur 11 qui délimite l'extrémité inférieure de la couche de panneaux 3. La figure 2 montre un raccordement (qui peut être de type conventionnel, par clipsage ou vissage notamment) entre un profilé 4a vertical et l'un des profilés d'appui 5 du bas de l'ossature 2. De manière similaire on peut voir sur la figure 1 que le profilé 5 est accolé contre la branche avant d'un profilé supérieur 12 qui délimite l'extrémité supérieure de la couche de panneaux 3. Des vis 5d visibles sur la figure 2 peuvent aussi servir à fixer ces profilés d'appui 5 au plancher 7. Une fixation analogue au plafond peut être utilisée pour les profilés d'appui 6.

Comme cela est bien visible sur la figure 1, les profilés d'appui 5, 6 forment deux faces d'appui 5a, 6a qui sont ici parallèles et situées aux extrémités opposées (haut et bas) de l'ossature 2, pour supporter le parement externe 8. Ces faces d'appui 5a, 6a supportent ici frontalement le parement externe 8 et présentent chacune une hauteur d'au moins 25 mm et de préférence d'au moins 35 mm. Les profilés d'appui 5, 6 peuvent être métalliques ou non métalliques et présentent de préférence une même largeur normalisée.

On comprend que la base 5b des profilés d'appui 5 et 6 s'étend ici parallèlement à la paroi P1, selon une même largeur que la largeur de la couche de panneaux 3. C'est la largeur de cette base 5b (qui se mesure perpendiculairement à la paroi P1) qui permet de définir un espace E entre le parement externe 8 et la face avant F1 de la couche de panneaux PIV. Autrement dit, les profilés 4a et les profilés d'appui 5 et 6 peuvent présenter une fonction d'entretoisement (avec les bases respectives 5b et 6b) sans contact avec les panneaux PIV 3, et former des appuis intermédiaires pour le parement externe 8.

Bien entendu, des éléments rigides ayant une section différente d'un U peuvent être utilisés, par exemple des barres métalliques 4b ou montants analogues en complément ou en remplacement des profilés 4a. Ces éléments rigides s'étendent entre les profilés d'appui 5 du bas et les profilés d'appui 6 du haut de l'ossature 2 et renforcent ainsi le système d'isolation thermique 1. Par ailleurs, il peut être prévu d'utiliser une seule pièce ayant une section transversale en W pour remplacer les profilés 5 et 11 d'une part, et 6 et 12 d'autre part. Comme cela est visible sur la figure 2, on peut aussi prévoir d'utiliser des profilés 4a ayant en coupe transversale une forme de L qui s'appuie sur des profilés en H agencés entre deux panneaux 3 adjacents d'une même rangée.

L'espace libre E entre le parement externe 8 et la face avant F1 de la couche de panneaux 3 présente une profondeur d1 qui peut être légèrement supérieure ou égale à la largeur des profilés 4a. On comprend qu'un tel espace E protège les panneaux 3 d'un organe qui traverserait l'épaisseur du parement externe, en particulier lorsque cette profondeur d1 est de l'ordre de 20 ou 30 mm par exemple. L'épaisseur totale du système d'isolation thermique 1 peut être très inférieure à 150 mm, et de préférence inférieure ou égale à 50 mm. Pour cela l'épaisseur des panneaux 3 peut être choisie inférieure ou égale à 25 mm et la profondeur d1 inférieure ou égale à 25 mm. La distance entre la paroi P1 et la couche de panneaux 3 est par ailleurs minimisée dans des formes de réalisation préférées, et représente par exemple moins de 20 mm.

Cet espace E permet la mise en place d'une couche 60 de matériau anti-perforation à partir de la face de parement 8, rigide ou de préférence à base de fibres ou tissu textile ou similaire et d'épaisseur inférieure à l'épaisseur des panneaux 3 de type PIV. Cette disposition permet de conserver l'intégrité de l'enveloppe 3b des panneaux 3 isolants sous vide lors d'interventions par perçage vissage, fixation d'éléments ou opération similaire sur le parement externe 8, en particulier lorsque le parement externe 8 est proche de la couche de panneaux 3.

En référence aux figures 1 et 2, il est prévu ici d'utiliser trois types de profilés 10, 10' et 11-12 horizontaux pour le maintien des panneaux 3 dans une couche verticale. Un quatrième type de profilés 13, verticaux, est optionnellement utilisé pour former une jonction entre les panneaux PIV d'une même rangée. Ces profilés 13 présentent une section en H en coupe horizontale. Ils sont par exemple découpés à façon et positionnés pour venir en contact contre deux tranches verticales de panneaux 3 voisins dans une rangée. La dimension verticale de ces profilés 13 est plus faible que celle des panneaux 3 de la rangée correspondante pour permettre leur mise en place dans le prolongement vertical des profilés horizontaux 10, 10', 11 ou 12 utilisés pour le maintien de la rangée concernée.

Parmi les trois types de profilés horizontaux 10, 10', 11 et 12 intégrés dans la couche et venant en contact direct avec les panneaux 3, on peut distinguer :
- un profilé 11 ou 12 en U pouvant se fixer par clipsage sur les bords verticaux du profilé d'appui 5 fixé au plancher 7 ou du profilé d'appui 6 fixé au plafond ;
- un profilé intermédiaire 10 en H qui s'étend horizontalement entre au moins deux panneaux PIV de rangées adjacentes ;
- un profilé intermédiaire 10' pour la mise en place de la dernière rangée de panneaux PIV (il s'agit ici de la rangée la plus haute), permettant un emboitement de chaque panneau 3 de cette rangée dans le profilé du dessus, ici le profilé 12, puis par poussée de l'extrémité inférieure du panneau 3 vers son placement final, dans l'alignement vertical de la couche.

En référence à la figure 2, les profilés 11 peuvent former une jonction d'angle à distance de deux parois P1, P2 perpendiculaires. Les profilés 11 du bas ainsi que des profilés 12 du haut peuvent être agencés de façon similaire. La figure 2 montre un agencement contigu de ces profilés 11 avec la branche latérale d'un des profilés 11 (ici parallèle à la paroi P2) accolée contre une extrémité d'un autre de ces profilés 11 (qui est ici parallèle à la paroi P1). Les profilés 13 qui ont une section en H sont remplacés, au niveau de l'angle, par deux profilés verticaux ayant une section en U et accolés l'un à l'autre (base de l'un accolée à branche latérale de l'autre).

Les profilés d'appui 5 maintiennent ici un écartement entre les parements externes 8, 8' et les panneaux 3, avec une éventuelle réduction locale de cet écartement lorsque le parement externe 8 parallèle à la paroi P1 fait saillie derrière le parement 8' perpendiculaire (parallèle à la paroi P2), comme illustré dans le cas de la figure 2. L'écartement e qui forme l'espace G le long de la face arrière F2 de la couche de panneaux 3 peut être sensiblement constant.

De préférence, les profilés 11 et 12 sont formés d'un seul bloc en matière plastique, par exemple en polyamide, en PVC, résine de polyuréthane ou encore à base de matériaux composites, de fibres de verre, éventuellement avec des particules métalliques. Un polyamide PA 66 chargé à 25% de fibres de verre est utilisé dans un exemple de réalisation.

Les profilés intermédiaires 10 et 10' peuvent être réalisés avec le même type de matière. Chacun des profilés 10, 10', 11 et 12 a ici une conductivité thermique inférieure ou égale à 0,6 W m⁻¹ K⁻¹ et de préférence inférieure à 0,25 W m⁻¹ K⁻¹. Afin de minimiser la conduction de chaleur au travers de la couche de panneaux 3, une conductivité thermique inférieure ou égale à 0,03 W m⁻¹ K⁻¹ est préférée pour le matériau des profilés 10, 10', 12 et 12. Il a été constaté qu'une conductivité trop élevée et un écartement trop important entre deux panneaux 3 adjacentes de type PIV étaient deux causes majeures de dégradation de la performance d'isolation du système d'isolation thermique. C'est pourquoi il s'avère important d'utiliser un matériau ayant une conductivité thermique faible à environ 0,5 W m⁻¹ K⁻¹, en particulier avec l'utilisation de profilés qui ont typiquement une épaisseur de l'ordre de 1-2 mm. Une épaisseur de l'ordre de 3-4 mm peut être tolérée à condition d'utiliser un matériau pour les profilés 10, 10', 11, 12 qui présente une conductivité thermique environ deux fois plus faible, de préférence inférieure à 0,10 ou 0,03 W m⁻¹ K⁻¹. Le matériau est dans ce cas considéré comme thermiquement très isolant. L'avantage d'utiliser un seul profilé à chacune des jonctions entre les tranches voisines des panneaux 3 est que l'écartement entre les deux tranches reste bien inférieur à 5 mm, et de préférence inférieur à 4 mm. Or il a été constaté une dégradation assez brutale de la performance de la couche de panneaux 3 lorsque cet écart atteint ou dépasse 4 mm. Dans ce cas, un transfert de chaleur par conduction se réalise de façon importante au niveau des jonctions et le bénéfice du super isolant dans les panneaux 3 est très dégradé, sauf à utiliser dans les jonctions une matière ayant une conductivité thermique s'approchant au mieux de celle des panneaux 3 de type PIV. Pour des raisons de coût des profilés 10, 10', 11, 12 et pour la bonne tenue mécanique de la couche, on comprend qu'il est préférable que l'écart entre les panneaux 3 soit réduit à moins de 3 mm.

Les profilés intermédiaires 10 et 10' peuvent être raccordés aux profilés verticaux 4a et/ou barres 4b par des clips (non représentés). En variante ou en complément on peut utiliser des bandes ou plaquettes adhésives adhérant à la fois aux éléments rigides 4a et 4b et aux profilés horizontaux 10 et 10', sans générer le moindre contact avec les panneaux 3 de la couche. On comprend que les éléments rigides 4a, 4b permettent de maintenir la verticalité de la couche de panneaux 3 et donc la distance de cette couche par rapport au parement externe 8 (premier espace libre E pour une lame d'air) et par rapport à la paroi P1 du bâtiment (deuxième espace G pour une lame d'air).

En référence à présent à la figure 3A, il est prévu de fixer le profilé 11 à section en U par soudage ou collage au profilé d'appui 5. Dans des variantes, le profilé 11 du bas peut se fixer par clipsage sur l'un des bords verticaux (bord adjacent 5d visible sur la figure 3A) du profilé d'appui 5 fixé au plancher 7. La fixation du profilé 12 du haut sur le profilé d'appui 6 peut être réalisée de façon similaire.

Les figures 3B, 3C et 3D montrent un système d'éclisse 11a, continu ou discontinu, intégré au profilé 11 en plastique (par exemple en polyamide ou résine polyuréthane) pour obtenir la liaison avec le profilé d'appui 5 qui est ici en matière métallique. En variante, le profilé 11 et le profilé 12 peuvent être rendus solidaire du profilé d'appui correspondant 5 ou 6 (forme de W, bi-matériau) avant les opérations de fixation des profilés d'appui respectifs 5 et 6.

Les profilés 5 et 6 peuvent être choisis parmi les rails utilisés dans une ossature standard pour contre cloison de paroi, et présentent par exemple une hauteur d'environ 25-30 mm et une largeur inférieure à 50 mm, par exemple comprise entre 25 et 48 mm.

En référence aux figures 3A à 6B, les profilés 10, 11 et 12 présentent chacun une ou deux cavités C définies entre une paire de branches latérales de ces profilés 10, 11, 12. Le fond de ces cavités C est défini par une base d'appui B qui est sensiblement parallèle à la direction générale définie par les rangées de panneaux 3. La base d'appui B est en contact avec une tranche d'au moins un des panneaux, tandis que les branches avant b1 et arrière b2 des profilés 10, 11 et 12 recouvrent et sont en contact avec des zones de marge des faces respectives avant et arrière de ces même panneaux 3. Les cavités C permettent ainsi la fixation d'un ou plusieurs panneaux 3, le maintien mécanique étant obtenu avec une légère compression du panneau 3 PIV vers les bords inférieur et supérieur du panneau 3.

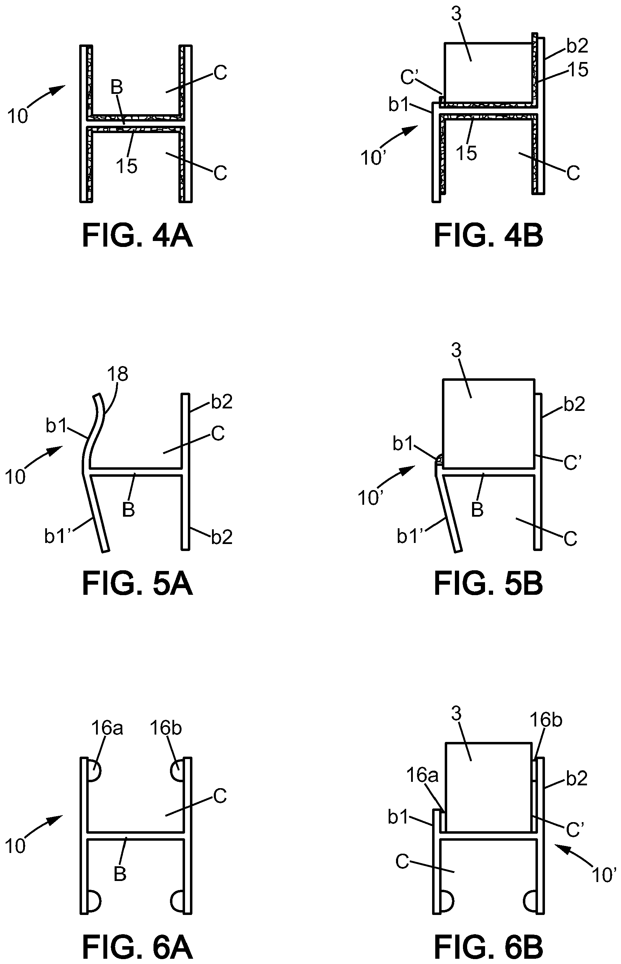

En référence aux figures 3A-3B et 4A-4B et selon une forme de réalisation préférée, des moyens élastiquement déformables, ici sous la forme de mousse alvéolaire compressible 15, recouvrent les faces intérieures des cavités C associées à au moins une rangée de panneaux 3, pour serrer les panneaux de cette rangée.

Comme cela est bien visible sur la figure 3A, l'épaisseur d3 du panneau 3 est légèrement supérieure à la largeur d2 de la cavité C définie dans le profilé, ici le profilé 11 du bas. Ainsi, le panneau 3 peut s'emboîter par glissement entre les branches verticales du profilé 11 en étant protégé par la couche de mousse compressible 15. La couche de mousse est ici conformée en U avec une épaisseur comprise entre 1 et 3 mm par exemple. Le maintien et la pression sur la tranche T et l'extrémité inférieure des faces avant et arrière du panneau 3 sont obtenus par la nature et l'épaisseur de la mousse de protection, conduisant à une largeur libre inférieure de 0,5 à 2 mm (éventuellement inférieure d'environ 3 mm) à l'épaisseur d3 des panneaux 3 de type PIV. La partie haute de la mousse compressible 15 peut être en biseau pour favoriser l'emboitement du panneau 3. L'étanchéité à l'air est assurée par le contact serré entre la mousse compressible 15 et la surface externe du panneau 3. On comprend qu'il s'agit d'un léger serrage qui préserve l'intégrité du panneau 3. Le même principe s'applique pour les deux cavités C du profilé intermédiaire 10 ou les deux cavités C et C' du profilé intermédiaire 10', qui sont visibles sur la figure 4A, respectivement 4B. On comprend que la circulation d'air est alors limité dans les cavités C, C' et une étanchéité durable peut être obtenue, de sorte qu'il est possible d'isoler le volume d'air situé derrière la couche de panneaux par rapport à la lame d'air formée entre la face avant F1 de la couche et le parement externe 8.

En référence aux figures 3D, 6A et 6B, un effet de serrage analogue est obtenu sur les faces avant et arrière du panneau 3 en utilisant un ou des bourrelets 16a, 16b rapportés ou intégrés à la forme du profilé 10, 10', 11 ou autre profilé horizontal qui assure cette fonction. Dans le cas des cavités C formées dans les profilés 10, 10' 11 ou 12 par exemple, ces bourrelets avant 16a et arrière 16b peuvent être agencés à distance de la base B, sur les faces intérieures des branches verticales et s'étendent sur la longueur du profilé 10, 10', 11 ou 12, horizontalement. Dans ce cas l'épaisseur d3 du panneau 3 est supérieure à la largeur localement définie au niveau du ou des bourrelets 16a, 16b. Ici également, la largeur libre formée dans la cavité C au niveau des bourrelets 16a, 16b peut être inférieure de 0,5 à 2 mm (ou éventuellement inférieure d'environ 3 mm) à l'épaisseur d3. Les bourrelets 16a, 16b ont ici une surface de contact convexe et peuvent présenter une compressibilité comparable à celle de la mousse 15 alvéolaire.

Bien entendu le glissement du panneau 3 s'effectue de façon sensiblement verticale jusqu'à positionner la tranche T en contact avec la base d'appui B. Un des avantages de ce système de maintien par pression, outre l'étanchéité à l'air, est d'envisager qu'une seule dimension de profilé en largeur puisse convenir à plusieurs épaisseurs pour le panneau 3 de type PIV.

En référence aux figures 3C et 5A, des profilés 10 et 11 sont en matière plastique. Ils sont ici représentés avec une branche avant b1 ou arrière b2 qui présentent une lèvre d'étanchéité. Dans une forme de réalisation particulière, l'épaisseur de la branche b1 ou b2 peut être réduite localement, par exemple à mi-hauteur de la branche b1 ou b2 pour créer une légère flexibilité qui facilite le glissement par emboitement du panneau 3 vers sa position finale dans la cavité C.

On obtient ainsi un glissement, représenté par la flèche 19 dans les figures 3B-3D, avec un minimum de frottement entre l'enveloppe 3b du panneau 3 et les branches b1-b2 du profilé correspondant. On peut noter que les profilés 13 peuvent présenter une section en H en coupe transversale qui est identique à celle des profilés 10 et permettre le même genre d'emboitement des panneaux.

En référence à la figure 4B, le profilé intermédiaire 10' qui peut être agencé entre la rangée supérieure et une rangée adjacente présente ici une cavité C' particulière qui débouche du côté avant de la couche de panneaux 3. Ce profilé intermédiaire 10' à en section une forme qui diffère du H représenté à la figure 4A en ce que la branche b1 est raccourcie très significativement (ici la longueur de la branche b1 est inférieure à 10% de la longueur de la branche b2). Le profilé 10' est donc dissymétrique. La cavité C, ici inférieure, est identique à la cavité inférieure montrée sur la figure 4A. La mousse compressible 15 enveloppe intégralement la tranche du panneau 3 et joue le rôle d'un joint. L'épaisseur de cette mousse est typiquement de l'ordre de 1 mm. Une fois le panneau 3 installé, l'épaisseur au niveau de la base B qui relie les branches b1, b2 est de préférence inférieure ou égale à 4 mm, et plus préférentiellement comprise entre 0,1 et 3 mm. Dans l'exemple des figures, la base B a une épaisseur d'environ 0,6 mm. Avec cette minceur au niveau des jonctions, On comprend que les panneaux 3 de la couche définissent une surface qui peut être considérée comme égale à la totalité de la surface du système d'isolation 1. Bien entendu, on peut fixer dans une variante la mousse compressible 15 seulement sur une partie de la base (B) et/ou seulement sur l'une des faces internes de l'un et/ou l'autre des branches avant et arrière b1, b2.

En référence aux figures 5A et 5B, on peut voir qu'au moins une partie des cavités C peut être délimitée par une branche, ici une branche avant b1', qui penche vers l'intérieur de la cavité C en s'approchant de son bord libre. Dans ce cas, une force de rappel élastique s'exerce, par effet de mémoire de forme du profilé 10, respectivement 10', contre le panneau 3 emboîté par glissement dans la cavité C. Le bord libre de ces branches b1' présente de préférence une surface convexe pour le contact avec le panneau 3. On comprend que ce type de branche b1' peut être utilisé dans les profilés 11 et 12.

Comme illustré sur la figure 6B, la présence d'un bourrelet 16a formé par de la mousse compressible 15 ou intégralement formée avec la branche avant raccourcie b1 permet un maintien efficace du panneau 3 dans la cavité C' du profilé intermédiaire 10'. Ici le bourrelet 16a fait saillie radialement vers l'intérieure de la cavité C, de façon similaire au bourrelet 16b. Dans l'exemple de la figure 5B, la branche b1 peut être formée d'un bourrelet compressible qui fait saillie depuis la base B, selon une direction perpendiculaire à la base B.

Dans l'exemple des figures 4B et 5B, il peut être envisagé de fixer une bande adhésive non agressive pour l'enveloppe 3b du panneau 3, en recouvrant la branche b1 raccourcie du panneau intermédiaire 10' et une portion adjacente de la face avant du panneau 3. On s'assure ainsi que l'étanchéité à l'air est parfaitement réalisée.

Le procédé de montage du système 1 par utilisation des profilés 10, 10', 11 et 12 va à présent être décrit en référence aux figures 1-2, 3A-3D et 7A-7B.

Avant de disposer les panneaux 3 de type PIV, l'opérateur installe les éléments rigides et structurels de l'ossature 2, en particulier les profilés d'appui 5, 6 parallèlement à la paroi P1 aux deux extrémités opposées ((haut et bas) de l'ossature 2. La base 5b du profilé d'appui 5 à section en U est fixée au plancher 7 à l'aide de premiers éléments de fixation rigide de l'ossature 2, ici des vis 5d. La base 6b du profilé d'appui 6 à section en U est fixée de façon analogue au plafond à l'aide de deuxièmes éléments de fixation rigide de l'ossature 2. Un espace G est laissé entre la paroi P1 et la couche de panneaux 3. Le profilé du bas 11, en matériau peu conducteur de la chaleur, est ensuite fixé au profilé d'appui 5, en étant placé du côté de la paroi P1 à isoler. Une section en W est obtenue en accolant les deux sections en U de cette paire de profilés 5 et 11.

La première rangée de panneaux 3 est alors formée, par emboîtement des panneaux 3 de manière serrée dans les cavités C des profilés 11, par exemple comme illustré sur l'une des figures 3A-3D. Cette rangée horizontale peut être optionnellement complétée avec des profilés 13 verticaux à section en H comme cela est visible sur la figure 2. Il peut être prévu de fixer un ruban adhésif à la jonction entre les profilés 13 et le profilé 11 du bas pour obtenir une bonne étanchéité à l'air entre deux panneaux 3 adjacents dans la première rangée.

La deuxième rangée de panneaux 3 de type PIV est mise en place après la pose des profilés intermédiaires 10 qui recouvrent intégralement, de manière étanche, la tranche supérieure des panneaux 3 de la première rangée. Le montage des panneaux 3 de la deuxième rangée est analogue à celui de la première rangée lorsque la couche comprend au moins trois rangées. On comprend que plusieurs rangées successives (à un niveau de hauteur croissant) peuvent être formées de façon identique.

En référence à présent aux figure 7A et 7B, avant de former la dernière rangée de panneaux 3 de type PIV, on met en place sur la tranche supérieure des panneaux 3 de la rangée précédente un profilé intermédiaire 10' dont une branche est raccourcie ou absente (le profilé 10' ayant une section en H modifiée). De ce fait, la cavité C' prévue pour la tranche inférieure des panneaux 3 de la dernière rangée débouche vers l'avant et les panneaux 3 sont essentiellement maintenus par la banche arrière b2.

Lorsque la branche b1 associée à la cavité C' forme une courte projection, par exemple d'une hauteur inférieure à 5 ou 10 mm, une étanchéité convenable est obtenue. A titre comparatif, les branches avant et arrière b1, b2 sans raccourcissement peuvent s'étendre sur une distance de préférence supérieure à 10 mm et typiquement au moins de l'ordre de 30 mm. En l'absence de cette branche b1, on fixe un ruban adhésif parallèlement à la rangée, de façon à maintenir bien verticalement les panneaux 3 de la dernière rangée et étanchéifier la zone entre le profilé intermédiaire 10' et la tranche T correspondante du panneau 3 (les panneaux 3 formant de préférence des angles droits au niveau des coins). En référence à la figure 7B, on comprend que le profilé 12 est déjà connecté au profilé d'appui 6 (qui forme un rail horizontal supérieur comme illustré sur la figure 1) par sa branche arrière b2.

Lorsque la distance entre la dernière rangée de panneaux 3 et le plafond est très faible, le profilé 12 du haut complète la couche de panneaux 3, ce profilé étant fixé au profilé d'appui 6 avant de former la dernière rangée. En revanche lorsque cette distance est significative mais ne peut être comblée par des panneaux 3 de dimension standard, une plaque ou panneau complémentaire, par exemple à base de polyuréthane et de préférence de conductivité inférieure à 30 mW m⁻¹ K⁻¹, est utilisé pour compléter la couche de panneaux 3. Ce panneau complémentaire peut s'emboîter dans un profilé intermédiaire 10' et dans le profilé du haut 12 de la façon illustrée sur la figure 7B, un ruban adhésif pouvant éventuellement compléter la jonction avec le profilé intermédiaire 10'.

Après la formation des rangées de panneaux 3, on raccorde les éléments structurels verticaux, ici des profilés 4a et montants 4b comme illustré sur la figure 1, aux profilés d'appui 5, 6 qui sont fixés respectivement au plancher 7 et au plafond de la pièce du bâtiment. Les clips ou autres organes de liaison agencés selon une direction perpendiculaire à la paroi P1 sont utilisés pour maintenir la verticalité de la couche de panneaux 3. Ce maintien peut être réalisé de manière conventionnelle par vissage ou sertissage.

Le parement externe 8 est fixé sur les profilés et montants verticaux 4a, 4b ainsi que sur les faces d'appui 5a, 6a des profilés d'appui 5 et 6, par exemple avec des vis de longueur inférieure à la distance d1 et de préférence strictement inférieure à l'écartement prévu pour l'espace libre qui s'étend le long du parement externe 8. Juste avant la pose du parement externe 8, les raccords de fluides, les gaines électriques et les connexions pour prises électriques (non représentés) sont positionnés dans l'espace libre E, au même niveau que les montants 4a, 4b de l'ossature 2.

Bien que la description qui précède présente le système d'isolation thermique 1 comme une contrecloison rapportée sur des parois P1, P2 existantes, on comprend que le système d'isolation thermique 1 peut être assemblé pour former une nouvelle cloison qui sépare une pièce en deux pièces. Dans ce cas un élément de cloison tel qu'un parement remplace la paroi P1 et des profilés d'appui additionnels similaires aux profilés 5, 6 (ainsi que des éléments structurels verticaux) peuvent être utilisés entre la couche de panneaux 3 et cet élément de cloison.

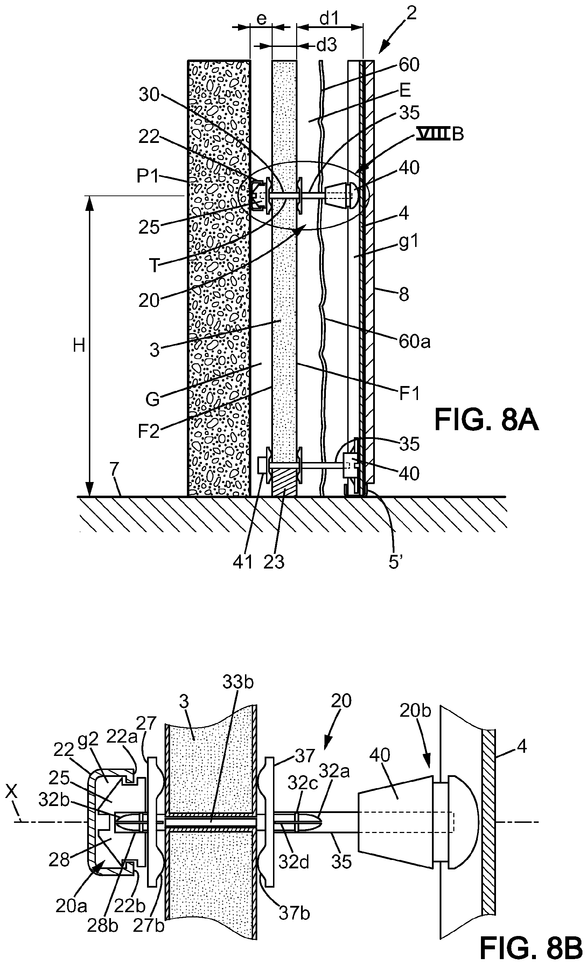

Dans la forme de réalisation décrite en référence aux figures 1 à 7B, les jonctions entre panneaux 3 de type PIV sont réalisées en utilisant des profilés 10, 10', 11, 12 qui s'étendent horizontalement parallèlement aux rangées de panneaux 3. L'ossature 2 peut en outre présenter à la fois des profilés 10, 10', 11 et 12 et des dispositifs d'entretoisement 20 de la figure 8B qui forment des appuis intermédiaires pour le maintien de la couche de panneaux 3 (avec un maintien d'au moins deux panneaux 3 de type PIV). De tels dispositifs d'entretoisement 20, entièrement distincts des profilés 10, 10', 11, 12, vont être décrits plus particulièrement dans les figures 8A à 14.

En référence à présent aux figures 8A à 14, il est prévu d'autres formes de réalisation du système d'isolation thermique 1 avec des dispositifs d'entretoisement 20 qui traversent la couche isolante de panneaux 3 entre les coins 3c de plusieurs panneaux 3 de type PIV. En référence à la figure 8A, le système d'isolation thermique 1 forme ici un élément mural qui recouvre la paroi P1 d'un bâtiment et comprend un parement externe 8, des panneaux 3 de type PIV ayant chacun une forme de plaque avec des coins 3c, et répartis en une couche de panneaux 3, et une ossature 2 pour fixer les panneaux 3 dans la couche. Dans les exemples représentés, les panneaux 3 ont un format rectangulaire et présentent quatre coins 3c et quatre tranches T. L'ossature 2 présente ici :
- des moyens structurels rigides 4, 5', 22 en appui sur au moins un substrat du bâtiment (notamment le plancher 7 visible sur la figure 8A) et agencés entre le parement externe 8 et la face avant F1 de la couche de panneaux 3 ; et
- les dispositifs d'entretoisement 20 qui forment des appuis intermédiaires pour le maintien de la couche de panneaux 3.

Comme cela est bien visible sur les figures 8A et 8B, les panneaux 3 sont agencés en rangées, les différentes rangées étant superposées pour former ici une seule couche de panneaux 3 qui s'étend perpendiculairement au plancher 7. L'ossature 2 du système d'isolation thermique 1 comporte des profilés 4, 5', 22 qui s'étendent de préférence parallèlement et/ou perpendiculairement aux rangées. Ici, des premiers profilés 4 qui font partie des moyens structurels rigides s'étendent entre le plancher 7 et le plafond (verticalement) pour soutenir le parement externe 8. La liaison des premiers profilés 4 avec le plancher 7 et le plafond est réalisée d'une façon connue en soi. On peut par exemple prévoir de profilés 5' de préférence métalliques formant rails de fixation pour l'accrochage au plancher 7 et au plafond des premiers profilés 4. On comprend que les moyens structurels rigides peuvent inclure des profilés 4, 5' qui peuvent être utilisés dans l'ossature 2 illustrée sur la figure 1, entre la couche de panneaux 3 et le parement externe 8.

Un panneau complémentaire 23, par exemple à base de polyuréthane et de conductivité inférieure à 30 mW m⁻¹ K⁻¹, est optionnellement utilisé pour ajuster le niveau en hauteur de la couche de panneaux 3. Dans l'exemple de la figure 8A, la hauteur du panneau complémentaire 23 est sensiblement égale à l'épaisseur d3 des panneaux 3, par exemple de l'ordre de 20 mm.

Des deuxièmes profilés 22, qui s'étendent parallèlement et au même niveau de hauteur que les jonctions entre deux rangées successives de panneaux 3, sont fixés directement contre la paroi P1. Les premiers et deuxièmes profilés 4, 22 peuvent être métalliques ou en une matière présentant une rigidité suffisante pour structurer l'élément mural. Ici, le ou les deuxièmes profilés 22 forment un seul rail continu dont le niveau de hauteur correspond par exemple à la jonction entre une première rangée et une deuxième rangée de panneaux 3 ou à la jonction entre cette deuxième rangée et une troisième rangée.

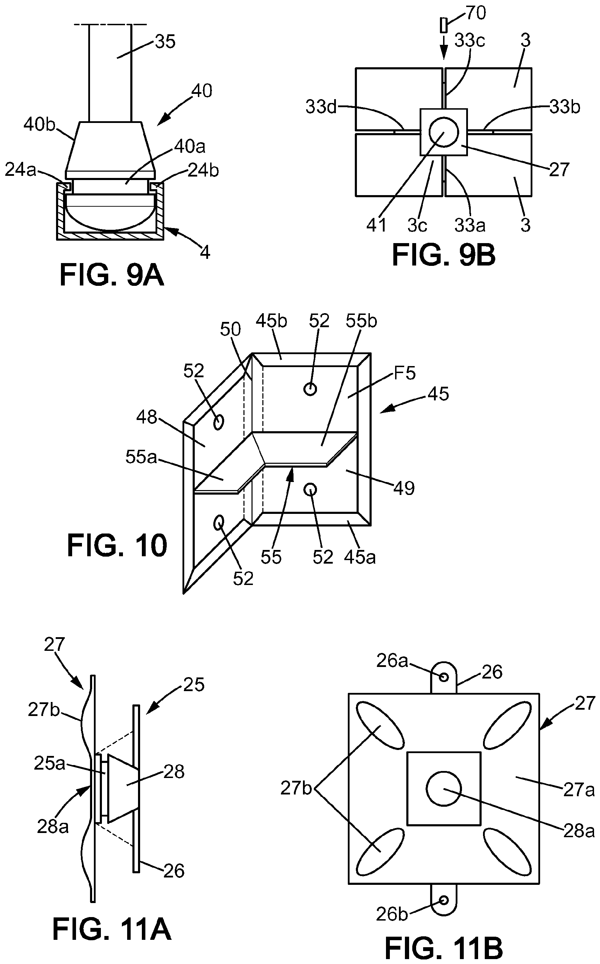

Au niveau des jonctions entre deux rangées successives, les dispositifs d'entretoisement 20 s'étendent chacun depuis l'un des premiers profilés 4 jusqu'à l'un des deuxièmes profilés 22. Dans l'exemple des figures 8A-8B et 9A, chacun des profilés 4 et 22 présente une section en U en coupe transversale et comporte des éléments d'appui 24a-24b, 22a-22b, ici des retours qui forment des rebords d'accrochage.

Un raccordement sur ces profilés 4, 22, de préférence par clipsage, est réalisé pour chacune des extrémités 20a, 20b de ces dispositifs d'entretoisement 20. Au niveau des bordures de la rangée inférieure, de la rangée supérieure, et éventuellement au niveau des extrémités latérales de la couche de panneaux 3, il peut être prévu des dispositifs d'entretoisement 20 plus courts, qui ne sont raccordés qu'à un seul profilé, par exemple le premier profilé 4. On comprend qu'au moins les deuxièmes profilés 22 sont optionnels, étant entendu que la paroi P1 du bâtiment peut servir d'ancrage à l'extrémité arrière 20b des dispositifs d'entretoisement 20.

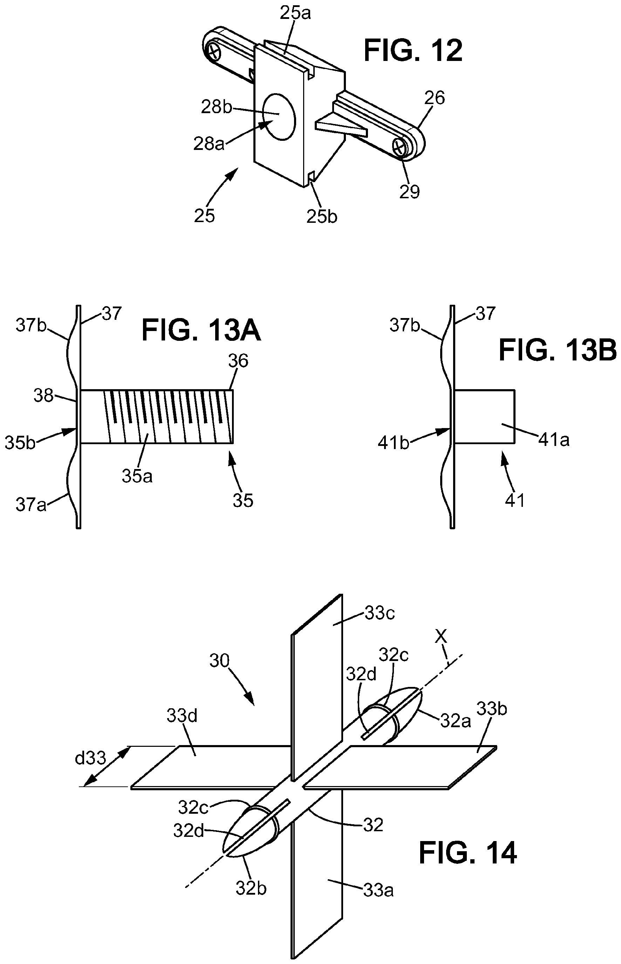

En référence plus particulièrement aux figures 8B et 14, on peut voir que les dispositifs d'entretoisement 20 comprennent plusieurs pièces associées pour former des appuis intermédiaires entre les premiers profilés 4, ici verticaux, et la paroi P1. Parmi ces pièces, on trouve de l'arrière vers l'avant : un élément support 25 ici clipsé sur le deuxième profilé 22 et agencé à l'arrière de la couche de panneaux 3, un élément étoilé 30 agencé en travers de la couche de panneaux 3, une tige d'entretoisement 35 qui prolonge l'élément étoilé 30 selon un axe longitudinal X défini par la portion centrale 32 de l'élément étoilé 30 et un élément de raccordement 40 réglable qui se fixe sur l'un des premiers profilés 4, de préférence en étant clipsé de manière similaire à l'élément support 25.

Chacun des dispositifs d'entretoisement 20 s'étend selon une direction transversale par rapport à la couche de panneaux 3. Les dispositifs d'entretoisement 20 permettent de maintenir l'écartement en profondeur d1 entre le parement externe 8 (ici fixé sur les premiers profilés 4 verticaux) et la face avant F1 de la couche de panneaux 3. Ces dispositifs d'entretoisement 20 sont de préférence non métalliques et au moins l'élément étoilé 30 présente une conductivité thermique très inférieure à 0,6 W m⁻¹ K⁻¹ et de préférence inférieure à 0,25 W m⁻¹ K⁻¹ (plus préférentiellement inférieure à 0,1 W m⁻¹ K⁻¹).

Les pièces constitutives des dispositifs d'entretoisement 20 vont à présent être décrites plus en détail en référence aux figures 9A-9B, 11A-11B, 12, 13A-13B et 14.

En référence aux figures 11A-11B et 12, l'élément support 25 comprend des pattes de fixation 26 parallèles au plan formé par la couche de panneaux 3, une platine 27 parallèle à la couche de panneaux 3 et un corps creux 28 qui s'étend entre les pattes de fixation 26 et la platine 27. Cet élément support 25 est monolithe et constitué de préférence de thermoplastique injecté qui présente une très bonne rigidité. L'intérieur du corps creux 28 forme une cavité 28a qui débouche au travers d'une ouverture centrale 28b formée dans la platine 27. La platine 27 peut cependant, dans une variante, être réalisée comme une pièce séparée.

Les pattes de fixation 26 peuvent être utilisées pour fixer le dispositif d'entretoisement 20 directement sur la paroi P1. Dans ce cas, les pattes de fixation 26 présentent deux orifices 26a, 26b respectivement situées près de l'extrémité libre des pattes de fixation 26 pour le passage de vis 29 (voir figure 12). Lorsqu'on clipse l'élément support 25 sur des deuxième profilés 22, on comprend que les pattes de fixation 26 peuvent être considérées comme optionnelles. L'élément support 25 forme une première extrémité 20a axiale du dispositif d'entretoisement 20 (extrémité arrière).

Comme cela est visible sur la figure 11A et 12, le corps creux 28 est pourvu d'une cavité 28a cylindrique (qui peut former un trou traversant), par exemple rainurée, permettant de recevoir l'élément étoilé 30 montré sur la figure 14.

Le corps creux 28 comporte ici deux faces latérales diamétralement opposées par rapport à la cavité 28a qui présentent chacune une rainure 25a, respectivement 25b permettant la fixation aux éléments d'appui 22a et 22b des deuxièmes profilés 22. Ici, l'opérateur peut simplement clipser l'élément support 25 sur les retours d'un profilé 22 qui forme une fourrure. Dans un mode de réalisation préféré, on utilise des fourrures de type « S47 » que l'on trouve aisément dans le commerce par exemple.

En référence aux figures 8B, 11A et 11B, la platine 27 intégralement formée avec le corps creux 28 ou en appui sur ce dernier présente une face intérieure 27a globalement plane sur laquelle des organes 27b font saillie. La surface définie par la face intérieure 27a de la platine 27 est par exemple comprise entre 5 cm² et 50 cm². L'ouverture centrale 28a représente dans cet exemple environ 10% de la surface de la platine 27.

Comme cela est visible sur la figure 8B, le dispositif d'entretoisement 20 comporte une autre platine 37, de sorte que les deux platines 27, 37 présentent chacune une face intérieure 27a, 37a pour maintenir un alignement des panneaux 3 dans la couche de panneaux 3 de type PIV. Chacune des platines 27, 37 s'étend de façon annulaire autour de l'ouverture centrale 28b ou 38 formée au centre de celles-ci. Les ouvertures centrales 28b, 38 des platines 27, 37 ont les mêmes dimensions et sont coaxiales dans le dispositif d'entretoisement 20.

Dans l'exemple des figures 11A et 11B, chacune des faces intérieures 27a, 37a des platines présente au moins quatre organes saillants 27b, respectivement 37b, qui sont élastiquement déformables et répartis dans quatre zones angulaires complémentaires. Ces organes saillants 27b, 37b élastiquement déformables viennent chacun en appui sur une face d'un des panneaux 3. Les organes saillants 27b, 37b présentent une surface plane ou convexe pour le contact avec les panneaux 3, ce qui rend le contact avec l'enveloppe externe 3b du panneau 3 non agressif.

En référence à figure 13A, la platine 37 du côté avant du dispositif d'entretoisement 20 est ici agencée à l'extrémité d'une tige d'entretoisement 35 qui permet de former l'espace libre E entre le parement externe 8 et la face avant F1 de la couche de panneaux 3. Cette tige d'entretoisement 35 sert en outre à ajuster la verticalité du parement externe 8 de l'élément mural (contrecloison), lorsque l'utilisateur désire disposer d'un tel espace libre E (lame d'air) pour le passage des raccordements de fluides et/ou autres connexions (notamment électricité). La tige d'entretoisement 35 est de préférence constituée d'une matière thermoplastique injectée, qui présente une très bonne rigidité.

La tige d'entretoisement 35 présente une surface externe filetée 35a de manière à former une vis. Un perçage 35b est réalisé au travers de la tige 35 et débouche au niveau de l'ouverture centrale 38 de la platine 37, de sorte que l'extrémité avant 32a (mâle) de la portion centrale 32 de l'élément étoilé 30 peut s'engager dans ce perçage 35b de la tige d'entretoisement 35.

On comprend que la tige d'entretoisement 35 et l'élément support 25 peuvent être encliquetés de la même façon sur la portion centrale 32 de l'élément étoilé 30. De préférence, la tige d'entretoisement 35 recouvre complètement l'extrémité avant 32a (mâle) de la portion centrale 32 qui est alors enfoncée dans le perçage 35b. Il est préférable d'utiliser une même matière plastique injectée pour ces pièces afin de faciliter l'encliquetage.

Dans des variantes où l'espace libre E entre le parement externe 8 et la face avant F1 de la couche de panneaux 3 n'est pas nécessaire ou peut être limité à un écartement en profondeur d1 très faible, par exemple inférieur à 10 mm, la tige d'entretoisement 35 est remplacée par un élément de raccordement 40 qui se fixe sur l'un des premiers profilés 4. Cet élément de raccordement 40 peut alors intégrer la platine 37 à une extrémité arrière de celui-ci et peut être identique à l'élément support 25. L'élément de raccordement 40 peut alors être identique ou similaire à l'élément support 25 visible sur les figures 11A-11B et vient se fixer à l'extrémité avant 36 de la tige d'entretoisement 35.

Dans des variantes, la platine 27 ou 37 peut cependant constituer une pièce intercalaire dans le dispositif d'entretoisement 20. Ainsi, bien que la platine 37 a été décrite comme solidaire de la tige d'entretoisement 35 ou de l'élément de raccordement 40, on comprend que la platine 37 du côté avant peut être une pièce distincte rapportée sur l'extrémité avant 32a de la portion centrale 32 de l'élément étoilé 30 et maintenue serrée contre une face correspondante d'un panneau 3 de type PIV par la tige d'entretoisement 35 ou par un élément de raccordement 40 tel que montré sur la figure 9A.

En référence à la figure 9A, l'élément de raccordement 40 présente des rainures formées sur sa surface externe de façon analogue aux rainures de l'élément support 25 ou une rainure annulaire 40a. Dans une variante, il peut être prévu de doubler les rainures avec un décalage axial. Dans ce dernier cas on comprend qu'un tel élément de raccordement 40 peut servir à ajuster la distance d'écartement en profondeur d1 entre le parement externe 8 et la face avant F1 de la couche de panneaux 3, selon que l'on positionne les éléments d'appui 24a-24b des premiers profilés 4 dans les rainures les plus en avant ou dans les rainures les plus en arrière. Alternativement, et en particulier lorsque l'espace libre E entre le parement externe 8 et la face avant F1 de la couche de panneaux 3 doit être important, l'élément de raccordement 40 réglable comporte un corps tubulaire 40b avec un filetage du côté de sa face interne pour être vissé sur la tige d'entretoisement 35.

L'élément de raccordement 40 réglable forme une deuxième extrémité 20b axiale (avant) du dispositif d'entretoisement 20. Dans un mode de réalisation préféré, cet élément de raccordement 40 est fixé sur un ou des éléments d'appui 24a-24b des premiers profilés 4, qui sont typiquement des fourrures « S47 » commercialisés par la société Lafarge. Les premiers profilés 4 sont ici agencés verticalement et s'étendent sur une hauteur sensiblement égale à la hauteur du parement externe 8.

En haut et en bas de l'élément mural formant la contrecloison, les dispositifs d'entretoisement 20 ne sont pas sollicités mécaniquement. Afin de simplifier le montage des dispositifs d'entretoisement 20 à ces extrémités, on peut alors utiliser un simple bouchon 41 en remplacement de la tige d'entretoisement 35 et de l'élément de raccordement 40 car il n'y pas besoin à ces endroits particuliers de raccordement sur les deuxièmes profilés.

La figure 13B montre un exemple d'un tel bouchon 41 qui comporte ici la platine avant 37, un corps creux 41a qui s'étend vers l'arrière de la platine 37, et présente un trou rainuré 41b qui traverse centralement la platine 37. L'extrémité avant 32a de la portion centrale 32 de l'élément étoilé 30 peut s'engager dans ce trou rainuré 41b. Les rainures internes permettent de régler le serrage par des panneaux 3 par les organes saillants 37b de la platine 37. Le bouchon 41 est en matière plastique injectée pour permettre un encliquetage aisé sur l'élément étoilé 30.

En référence à la figure 14, la portion centrale 32 de l'élément étoilé 30 est de préférence plus longue que l'épaisseur d3 des panneaux 3 et définissant l'axe longitudinal X. Cette portion central 32 s'étend entre son extrémité arrière 32b qui se connecte avec l'élément support 25 et son extrémité avant 32a qui se connecte avec la tige d'entretoisement 35 ou à un élément de raccordement 40. La fonction de support des panneaux 3 est assurée par les branches 33a, 33b 33c, 33d de l'élément étoilé 30 et le réglage en profondeur est par exemple permis par le mode de fixation des extrémités 32a et 32b, ici de type mâle, de la portion centrale. Comme cela est bien visible sur les figures 8B et 14, la portion centrale 32 fait saillie de part et d'autre des branches 33a, 33b, 33c, 33d selon l'axe longitudinal X pour définir les deux extrémités mâles.

La portion centrale 32 est mince et allongée et quatre branches 33a, 33b, 33c, 33d sont agencées de façon symétrique autour de l'axe longitudinal X dans l'exemple représenté. Une croix est ainsi formée et les quatre branches 33a, 33b, 33c, 33d définissent quatre angles respectifs de 90° autour de l'axe longitudinal X. Ainsi des branches associées par paire peuvent recevoir des coins 3c des panneaux 3 de format parallélépipédique.

La portion centrale 32 a une forme de tige creuse de section ici circulaire. Le diamètre externe de cette section est sensiblement égal au diamètre de la cavité de l'élément support 25, au diamètre interne du perçage de la tige d'entretoisement 35 et au diamètre interne du perçage du bouchon 41. Les fentes 32d aux extrémités 32a, 32b de cette portion centrale 32 permettent au plastique de se déformer pour pouvoir entrer plus facilement dans la cavité 28a du corps creux 28 de l'élément support 25 ou dans un perçage similaire.

Dans des variantes, la forme de croix peut être différente, par exemple similaire à la croix latine. Il est préférable d'avoir au moins trois branches qui ont sensiblement la même longueur pour chacun des dispositifs d'entretoisement. Les branches 33a, 33b, 33c, 33d sont fines et présentent de préférence une épaisseur inférieure ou égale à 3 mm et de préférence inférieure à 2 mm. Plus généralement, une épaisseur comprise entre 0,5 mm et 5mm peut être choisie et il est préférable que la portion centrale 32 définisse entre deux branches opposées un écartement inférieur ou égal à 5 mm, de façon à ce que l'écartement entre les panneaux 3 adjacents soit inférieur ou égal 5 mm. Si on utilise des panneaux 3 PIV de 20 ou 30 mm d'épaisseur, il est préférable que le ratio entre l'épaisseur des branches 33a, 33b, 33c, 33d et l'épaisseur des panneaux 3 soit inférieur à 1 :2 et bien plus préférentielement inférieur à 1:10 pour limiter cet écartement. Bien entendu, cet écartement peut être éventuellement relativement grand dans des variantes utilisant des joints ayant une conductivité thermique très faible, par exemple très inférieure à 0,1 W m⁻¹ K⁻¹ et de préférence inférieure à 0,05 W m⁻¹ K⁻¹. A titre indicatif, des joints à base de polyuréthane ayant une conductivité thermique de l'ordre de 0,025 W m⁻¹ K⁻¹ permettent de compenser un écartement de l'ordre de 5 mm ou légèrement supérieur.

Dans l'exemple de la figure 14, chacune des branches 33a, 33b, 33c, 33d a une longueur d'environ 40 mm mesurée depuis l'axe longitudinal X et la largeur d33 est de l'ordre de 15 mm, cette largeur d33 étant très proche de l'épaisseur des panneaux 3. Dans l'exemple de la figure 9B (où les quatre panneaux 3 ne sont pas intégralement représentés), les branches 33a, 33b, 33c, 33d ont une longueur supérieure ou égale à 40 mm et sont en contact chacune avec deux tranches de panneaux 3 par leurs deux faces opposées. Ces faces de contact ainsi que les faces intérieures 27a, 37a des platines 27 et 37 sont parfaitement lisses. Les deux branches horizontales 33b, 33d sont parallèles aux deuxièmes profilés 22 et on comprend que la position du dispositif d'entretoisement 20 peut être ajustée au préalable en faisant coulisser l'élément support 25 dans un des deuxièmes profilés 22, pour obtenir une distance entre les dispositifs d'entretoisement 20 qui correspond exactement à la dimension en largeur d'un panneau 3 de type PIV.

Si les panneaux 3 de type PIV ont une épaisseur qui dépasse la largeur des branches 33a, 33b, 33c, 33d, par exemple de 5-15 mm, le maintien des panneaux 3 est obtenu à l'aide des platines 27, 37 ou autres moyens de maintien similaire pour le maintien des coins 3c des panneaux 3. Lorsque l'élément support 25 présente une platine 27 fixe, un réglage en position est obtenu en ajustant l'enfoncement de l'extrémité arrière 32b de la portion centrale 32 dans la cavité 28a de l'élément support 25. Un bourrelet annulaire 32c est par exemple formé sur cette extrémité arrière et une fente longitudinale 32d permet de déformer l'extrémité arrière 32b lors de l'enfoncement. Les rainures dans la cavité 28a de l'élément support 25 forment des crans pour bloquer la position d'enfoncement souhaitée.

L'extrémité arrière 32b peut présenter une forme identique à l'extrémité avant 32a pour permettre de régler l'enfoncement de la tige d'entretoisement 35 visible sur la figure 13A ou du bouchon 41 visible sur la figure 13B. Dans une variante, le réglage en position peut se faire uniquement d'un seul côté. Dans ce cas, une des platines 27 ou 37 peut être formée intégralement avec l'élément étoilé 30. Dans une variante de réalisation, la fente 32d permet aussi, à l'aide d'une broche formant coin, de fixer le raccordement.

Dans un mode de réalisation préféré, les organes saillants 27b, 37b formés sur les faces intérieures 27a, 37a des platines 27, 37 peuvent être compressés à la manière d'un ressort et peuvent exercer une force de rappel qui sert pour le maintien des panneaux 3 comme illustré sur les figures 8A et 8B. L'extension de ces organes saillants 27b, 37b dans le sens de l'axe longitudinal X est supérieure ou égale à 2 mm, et de préférence supérieure à 3 mm. De cette façon, un maintien peut être assuré même lorsque les panneaux 3 de type PIV ont une épaisseur d3 très faible qui est inférieure à la largeur d33 des branches 33a, 33b, 33c, 33d. Ainsi avec des organes saillants 27b, 37b ayant une extension de l'ordre de 3mm, présents sur les deux faces intérieures 27a, 37a des platines 27, 37, il est permis de maintenir des panneaux 3 de 10 mm d'épaisseur avec des dispositifs d'entretoisement 20 dont les branches 33a, 33b, 33c, 33d présentent une largeur de 15 mm. De préférence, le panneau 3 à bloquer est d'abord posé en appui sur les branches 33a, 33b, 33c, 33d de l'élément étoilé 30 avant de positionner la platine 27 ou 37 en contact serré contre la face avant du panneau 3.

Bien que les exemples des figures 8A-8B, 11A-11B et 13A-13b montrent des moyens d'appui sous la forme de platine 27 ou 37 généralement planes et pourvues d'organes saillants 27, 37b sur une face intérieure 27a, 37a, il doit être compris que d'autres formes de réalisation peuvent être utilisées, par exemple sous la forme de rosaces non planes, de pièces coniques ou tronconiques ou toute autre forme adaptée, de préférence avec un perçage de façon analogue aux platines 27, 37.

En référence à présent à la figure 10, on peut voir un exemple de système pour former une jonction entre deux couche de panneaux 3 perpendiculaires ou formant un angle proche de 90° à leur intersection. Le système de jonction 45 comporte des équerres d'angles agencées dans l'angle entre un premier mur formant la paroi P1 à isoler et un autre mur de refend ou analogue à isoler qui n'est pas alignée avec la paroi P1. L'équerre comporte ici deux plaques 48, 49 ayant une épaisseur comparable et de préférence égale à l'épaisseur définie par l'élément support 25 tel que représenté sur les figures 11A-11B. Chacune des plaques 48, 49 peut être constituée de deux feuilles en matière plastiques séparées par un nid d'abeille léger qui permet d'obtenir une épaisseur plus ou moins égale à l'épaisseur de l'élément support 25.

Les plaques 48, 49 sont agencées à 90° l'une par rapport à l'autre et un amincissement peut être prévu à la jonction 50 entre les deux plaques 48, 49 pour permettre un ajustement angulaire. Une charnière relativement flexible peut être ainsi formée pour permettre l'installation sur des murs en faux équerre. Chaque plaque 48, 49 est raccordée par des vis ou organes analogues (non représentés) au mur correspondant, au travers d'au moins deux orifices 52. Le vissage dans les murs est réalisé sans que la vis affleure par rapport à la face interne F5 des plaques 48, 49, ce qui prévient le risque de détérioration des panneaux 3 de type PIV qui peuvent reposer sur une portion d'un plateau 55 en équerre (ayant la forme général d'un L dans cet exemple).

Le plateau 55 en équerre présente ici deux portions complémentaires et contigües 55a, 55b, agencées parallèlement aux rangées de panneaux 3 et à distance des extrémités inférieure 45a et supérieure 45b du système de jonction 45. Les extrémités latérales de deux panneaux 3 reposent respectivement sur l'une et l'autre de ces deux portions 55a, 55b et une bande adhésive d'étanchéité est préférentiellement utilisée pour relier ces deux panneaux 3, au moins du côté de leur face opposée aux plaques 48, 49.

On peut aussi utiliser un système de jonction 45 sous une forme différente (demi-pièce plus courte en hauteur) lorsqu'on se rapproche du plancher 7 pour la rangée du bas, le plateau 55 étant alors situé à l'extrémité inférieure 45a. De façon similaire, le plateau 55 peut être situé à l'extrémité supérieure lorsqu'on se rapproche du plafond, pour la rangée la plus haute.

Le procédé de montage du système d'isolation thermique 1 par utilisation des dispositifs d'entretoisement 20 va à présent être décrit en référence aux figures 8A-8B, 11A-11B, 13A-13B et 14.

Avant de disposer les panneaux 3 de type PIV qui sont de préférence fabriqués en usine, l'opérateur installe des éléments rigides et structurels de l'ossature 2 qui sont montés parallèlement à la paroi et répartis comme prévu par le schéma de montage, de façon à laisser un espace G disponible entre la couche de panneaux 3 et la paroi P1 et un espace E intercalaire entre la couche de panneaux 3 et le parement externe 8.

Dans l'exemple représenté sur les figures 8A-8B, on fixe respectivement au plancher 7 et au plafond des moyens structurels rigides 4, 5' en s'appuyant sur au moins un substrat du bâtiment, à distance de la paroi P1. Ces moyens structurels 4, 5' comprennent ici des rails appelés rails de doublage qui sont fixés avec l'espace suffisant entre la paroi P1 du mur à doubler et le positionnement final du parement externe 8 de finition. Le profilé 5' qui forme un tel rail inférieur, visible sur la figure 8A présente une gorge qui débouche verticalement vers le haut. Un rail supérieur (non représenté) est fixé de façon similaire sur le plafond, de sorte que le rail inférieur est à l'aplomb du rail supérieur. La gorge du rail supérieur débouche bien entendu verticalement vers le bas.

Ces rails inférieur et supérieur permettent de recevoir respectivement le bout inférieur et le bout supérieur de premiers profilés 4 métalliques (par exemple de type « S47 ») ou en matière rigide aux propriétés de résistance similaires qui servent de support au parement externe 8 (ce parement étant sous la forme d'une plaque). Les premiers profilés 4, bien visibles sur la figure 8A, forment des montants verticaux qui s'étendent entre le rail inférieur et le rail supérieur. De préférence lorsqu'il faut recouvrir un angle, les premiers profilés 4 sont situés au moins à 30 cm de l'extrémité latérale de la paroi où se situe l'angle, de façon à laisser la place pour l'installation du système de jonction 45 visible sur la figure 10.

Toujours en référence aux figures 8A-8B, un ou plusieurs deuxièmes profilés 22 qui forment une fourrure (par exemple de type «S47») sont installés horizontalement sur la paroi P1 de support à plus ou moins 1,3 m du sol fini. Bien entendu, cette hauteur H peut varier en fonction de la configuration du local à équiper. La gorge g2 des ces deuxièmes profilés 22 débouche horizontalement à l'opposé de la paroi P1. Ainsi, on forme une fourrure permettant de raccorder une extrémité arrière 20a des dispositifs d'entretoisement 20. Il est bien compris que ce mode de fixation de l'extrémité arrière 20a des dispositifs d'entretoisement 20 est donnée à titre d'illustration et d'autres modes de fixation de ces dispositifs d'entretoisement 20 qui forment des appuis intermédiaires sont possibles, par exemple par un vissage directement sur la paroi P1 de support par des vis adaptées ou un collage avec une colle à base de plâtre.

Avant de commencer à poser les panneaux 3 de type PIV, on met en place une première série de dispositifs d'entretoisement 20 dans la fourrure horizontale installée sur la paroi P1, au niveau de la hauteur H. On assemble en premier lieu l'élément support 25 et la platine 27 associée avec l'élément d'entretoisement 20 comme cela est visible sur la figure 8A. Le réglage en profondeur de l'appui formé par le dispositif d'entretoisement 20 est obtenu grâce au vissage de l'élément de raccordement 40 amovible sur la tige d'entretoisement 35 et/ou par un clipsage plus ou moins accentué de l'élément support 25. Si cette dernière option est retenue, un dispositif de blocage de clipsage peut être utilisé pour éviter un déréglage ultérieur. Ce dispositif de blocage peut se présenter sous la forme d'une broche introduite dans la cavité 28a de l'élément support 25 visible sur la figure 11B.

L'élément étoilé 30 est ici placé entre l'élément support 25 et la tige d'entretoisement 35. Le raccordement aux premiers profilés 4 est réalisé par l'élément de raccordement 40 qui présente ici une symétrie de révolution autour de l'axe longitudinal X, ce qui facilite l'ajustement par vissage de la distance d'écartement entre l'élément étoilé 30 et le parement externe 8. Alternativement, la tige d'entretoisement 35 peut être omise et l'ajustement réalisé par un clipsage plus ou moins appuyé de l'élément de raccordement 40.

En référence à la figure 8A, une deuxième série de dispositifs d'entretoisement 20 est prévue, à un faible niveau de hauteur, pour le maintien des coins inférieurs de la rangée inférieure de panneaux 3. Ces dispositifs d'entretoisement 20 peuvent seulement être fixés, par une extrémité avant, aux premiers profilés 4. Les dispositifs d'entretoisement 20 de la première série et de la deuxième série permettent de former une rangée de panneaux de PIV qui est parallèle à la paroi. A l'aide d'au moins une autre série de dispositifs d'entretoisement 20, une ou plusieurs rangées de panneaux 3 sont formées.

En référence aux figures 8A et 8B, les coins 3c des panneaux 3 de type PIV sont chacun insérés entre deux branches adjacentes d'un élément étoilé 30 et l'assemblage des panneaux 3 à l'aide des dispositifs d'entretoisement 20 permet de former une couche de panneaux 3 à une distance intermédiaire entre la paroi P1 du bâtiment et les premiers profilés 4.

Chacun des coins 3c des panneaux 3 est maintenu par un rapprochement des platines 27, 37 ou moyens de maintien analogues répartis de part et d'autre des branches 33a, 33b, 33c, 33d de l'élément étoilé. Par exemple, la platine 37 associée à la tige d'entretoisement 35 comme montré sur la figure 13A peut être clipsée sur l'extrémité avant 32a de la portion centrale 32, avant ou pendant la pose des panneaux 3 de type PIV.

On comprend que les opérations de montage d'un premier profilé 4, de mise en place du dispositif d'entretoisement 20 avec réglage en profondeur de l'élément étoilé (typiquement par un clipsage plus ou moins accentué de l'élément support 25 et de la platine 37 associée) et de pose d'un panneau 3 de type PIV peuvent être répétées, par exemple tous les 600 mm lorsque la largeur du panneau 3 est de 600 mm. Cet entraxe permet une liberté de mouvement satisfaisante pour l'opérateur et par exemple compris plus généralement entre 300 et 1200 mm. La hauteur des panneaux 3 de type PIV est par exemple comprise entre 500 et 2000 mm et de préférence de l'ordre de 1200 mm. Mais bien entendu d'autres dimensions peuvent être utilisées.

Ce type d'assemblage permet de rendre solidaire des profilés métalliques des dispositifs d'entretoisement 20 non métalliques, qui préservent l'intégrité des panneaux 3 de type PIV. Les zones de jonction entre les bords verticaux et entre les bords horizontaux des panneaux 3 sont recouvertes à l'aide d'une bande adhésive spécifique 70 (ou autre élément d'étanchéité similaire), non agressive pour l'enveloppe 3b des panneaux 3. Ceci permet de rendre étanche à l'air la couche de panneaux 3 de type PIV. Des lames d'air (sans possibilité de circulation entre elle) sont alors formées de part et d'autre de la couche de panneaux 3.

Toujours en référence aux figures 8A et 8B, l'ossature 2 pourvue des dispositifs d'entretoisement 20 rigidifie mécaniquement la contre-cloison. Bien entendu, les dispositifs d'entretoisement 20 peuvent présenter un nombre de pièces différent et les moyens structurels 4, 5', 22 utilisés pour supporter ces dispositifs d'entretoisement 20 peuvent se présenter sous d'autres formes qui permettent de définir deux extrémités de fixation à distance de la couche de panneaux 3.

Le traitement en haut et en bas du système d'isolation thermique 1 se fait soit avec des panneaux 3 PIV de dimension spécifique, soit plus simplement avec un panneau 23 de polyuréthane ou une mousse rigide performante thermiquement comme cela est visible en bas de la figure 8A. Ici aussi, l'étanchéité à l'air, en particulier autour de l'ouvrage, est assurée par quelque moyen que ce soit (bande adhésive, mousse à expansion, projection de plâtre spécifique). Pour rapprocher au maximum du plancher 7 les dispositifs d'entretoisement, il peut être avantageux d'utiliser des éléments étoilés 30 à seulement trois branches (agencées en T inversé) pour soutenir la partie inférieure des panneaux 3 de la rangée la plus basse. Ceci est également applicable pour les dispositifs d'entretoisement 20 qui sont adjacents au plafond (avec les trois branches agencées en T). Les autres dispositifs d'entretoisement 20 comportent de préférence quatre branches 33a, 33b, 33c, 33d comme illustré sur la figure 14. Il peut aussi être intéressant d'utiliser, dans une variante de réalisation, une pluralité d'éléments étoilés 30 du même genre à quatre branches 33a, 33b, 33c, 33d, et dont l'une des branches 33a, 33b, 33c, 33d est de type sécable ou peut être retirée par un outil de coupe conventionnel.

Pour couvrir les angles, il est préférable que les panneaux 3 de type PIV soient supportés par des moyens structurels qui se présentent sous la forme du système de jonction 45 représenté sur la figure 10 plutôt que d'utiliser des profilés. Dans ce cas, la largeur d'au moins un des panneaux 3 qui se rejoignent à l'angle peut être le cas échéant réduite, par exemple de l'ordre de 300 mm contre 600 mm pour les panneaux 3 distants de l'angle.

En référence à la figure 10, le plateau 55 support de panneaux 3 du système de jonction 45 en équerre est installé au même niveau que les éléments étoilés 30 qui supportent les panneaux 3 à distance de l'angle. Un ruban adhésif permet de maintenir la jonction entre les deux panneaux 3 qui se croisent dans l'angle. Ce ruban ou bande analogue assure l'étanchéité à l'air. Ainsi, la couche de panneaux 3 de type PIV peut présenter, entre chaque paire de panneaux 3 adjacents, des éléments d'étanchéité formant barrière à une circulation d'air au travers de la couche.

Pour finir, il reste à fixer le parement externe 8, constitué typiquement d'au moins une plaque, parallèlement et à distance de la couche de panneaux 3, de préférence directement sur les premiers profilés 4 par un mode de fixation connu en soi.

En référence à la figure 8A, on peut voir qu'un système protecteur 60 de la couche de panneaux 3 peut être optionnellement placé entre le parement 8 et les panneaux 3. Ce système protecteur 60 peut être installé avant la fixation du parement externe 8 et permet d'empêcher le percement des surfaces de l'enveloppe 3b des panneaux 3 de type PIV par un organe de fixation ou de vissage ou autre organe analogue dont la longueur serait supérieure à l'espace libre E formée entre le parement externe 8 et la face avant F1 de la couche de panneaux 3. Le système protecteur 60 comprend ici une couche de matériau, de préférence à base de fibres, qui s'étend dans l'espace libre E et est adaptée pour prévenir une perforation de la couche de panneaux 3. Lorsqu'un organe traverse le parement externe 8, la couche de matériau fibreux du système protecteur 60 qui forme par exemple une face avant 60a du système protecteur 60 (en vis-à-vis du parement externe 8) permet d'arrêter la partie perforante de l'organe traversant le parement 8 avant la surface des panneaux 3 de type PIV. Un matériau rigide sous forme de plaque ou de dalle peut aussi être utilisé en remplacement ou en complément de la couche de matériau fibreux afin d'éviter un endommagement de l'enveloppe d'un panneau 3. De préférence l'épaisseur du système protecteur 60 est inférieure à l'épaisseur d3 des panneaux 3, par exemple en étant au moins deux fois inférieure.

La fixation du système protecteur 60 permet de positionner la couche de matériau anti perforation plus près du parement externe 8 que de la couche de panneaux 3 de type PIV. On comprend qu'un tel système protecteur 60 peut être fixé de façon connue en soi aux premiers profilés qui soutiennent le parement externe et/ou aux dispositifs d'entretoisement ou au parement externe 8 lui-même. Compte tenu de la présence des dispositifs d'entretoisement 20, le système protecteur 60 peut se décomposer en plusieurs portions. Bien entendu un tel système protecteur 60 peut être utilisé avec n'importe quelle variante de système d'isolation thermique 1. Par exemple, le système protecteur 60 peut être attaché derrière le parement externe 8 dans l'exemple de réalisation des figures 1 et 2, par exemple en étant fixé aux éléments d'écartement du système d'isolation thermique 1.

Par ailleurs, il sera compris que l'ossature 2 peut présenter à la fois des profilés 10, 10', 11 et 12 et des dispositifs d'entretoisement 20, ces éléments de jonction entre les panneaux 3 étant compatibles. Dans ce cas le réglage en profondeur des dispositifs d'entretoisement 20 doit simplement coïncider avec la position prise par les profilés 11 et/ou 12 qui ont été fixés indirectement sur un substrat du bâtiment, de sorte que la couche de panneaux 3 puisse s'étendre bien verticalement, à une distance d1 (pour l'espace E) du parement externe 8 et avec un écartement e (pour l'espace G) par rapport à la paroi P1 de support. Dans une variante l'un au moins des profilés 11 et 12 peut être supprimé et le parement externe 8 est supporté essentiellement par les dispositifs d'entretoisement 20. Par ailleurs on comprend que l'extrémité 20a des dispositifs d'entretoisement 20 peut être réalisée différemment et/ou non raccordée directement à la paroi P1. Par ailleurs, tout ou partie des dispositifs d'entretoisement 20 peut seulement servir à réaliser l'écartement entre la couche de panneaux 3 et le parement externe, l'extrémité 20a et la partie traversant la couche de panneaux 3 étant dans ce cas supprimées et un raccord fixe (par exemple par collage, clipsage ou autre) pouvant être prévu entre une extrémité du dispositif d'entretoisement 20 ainsi raccourci et les profilés 10, 10'.

Un des atouts du système d'isolation thermique 1 est de minimiser le temps de montage grâce à l'utilisation d'une ossature 2 qui facilite la pose des panneaux 3 de type PIV tout en évitant de mettre en contact l'enveloppe 3b de ces panneaux 3 avec des surfaces pouvant détériorer les performances de ces panneaux 3.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Système d'isolation thermique (1) destiné à former ou recouvrir une paroi (P1, P2) d'un bâtiment, comportant :
- des panneaux isolants (3) ayant chacun une forme de plaque avec quatre côtés dont deux côtés opposés parallèles, chacun des panneaux comprenant un matériau poreux (3a) résistant à la compression et une enveloppe barrière (3b) étanche aux gaz, fermée sous vide, qui renferme le matériau poreux, les panneaux (3) étant répartis en au moins une couche de panneaux en formant des rangées de panneaux ; et
- une ossature (2) pour fixer les panneaux (3) dans ladite couche, de sorte que ladite couche présente une face dite avant (F1) du côté d'un parement externe (8) et une face dite arrière (F2) opposée à la face avant, l'ossature comprenant une pluralité de profilés (10, 10', 11, 12) rigides parallèles aux rangées et structurant la couche, qui permettent de border deux côtés parallèles des panneaux (3) dans les rangées ; chacun des profilés ayant une conductivité thermique inférieure ou égale à 0,6 W m⁻¹ K⁻¹ et de préférence inférieure à 0,25 W m⁻¹ K⁻¹, et comprenant :
- une base d'appui (B) sensiblement parallèle à la direction générale définie par les rangées, en contact avec une tranche (T) d'au moins un des panneaux (3) ; et
- au moins une cavité (C) de fixation d'un panneau, ladite cavité étant délimitée entre une branche avant (b1) de recouvrement d'une face avant de panneau et une branche arrière (b2) de recouvrement d'une face arrière de panneau, lesdites branches avant et arrière (b1, b2) s'étendant du même côté depuis la base (B) ;
l'ossature (2) comprenant en outre :
- des moyens de fixation rigide (5d) en contact avec au moins un substrat du bâtiment,
- des dispositifs d'appui rigides (5, 6), ayant de préférence une direction d'allongement horizontale, qui présentent au moins deux faces d'appui (5a, 6a), les deux faces d'appui qui sont de préférence parallèles étant situées à des extrémités opposées du système (1) pour supporter le parement externe (8), les dispositifs d'appui (5, 6) comprenant des éléments d'écartement s'étendant de manière transversale par rapport aux panneaux et à distance des panneaux (3) pour définir un premier espace (E) entre ladite face avant (F1) et le parement externe (8),
**caractérisé en ce que** les dispositifs d'appui rigides (5, 6) et les moyens de fixation rigide (5d) sont répartis dans deux extrémités opposées de l'ossature (2), destinés à être raccordés à un substrat du bâtiment à chacune desdites deux extrémités opposées, ce grâce à quoi chacun des dispositifs d'appui (5, 6) peut être agencé de façon intermédiaire entre un substrat du bâtiment et un profilé (11, 12) et lesdits dispositifs d'appui (5, 6) permettent de définir un espacement entre ladite au moins une couche de panneaux et ladite paroi (P1) du bâtiment,
**et en ce que** les panneaux (3) sont maintenus dans les rangées en s'insérant dans une paire de rails définis par les profilés (10, 10', 11, 12) et distants de ladite paroi (P1),
**et en ce que** les faces d'appui (5a, 6a) des dispositifs d'appui (5, 6) définissent des supports frontaux pour la fixation du parement externe (8), chacune des faces d'appui étant définie par une branche d'un profilé additionnel directement fixé avec un des profilés (11, 12) structurant la couche de panneaux (3), le profilé additionnel comprenant une base (5b, 6b) qui forme un des éléments d'écartement entre le parement externe (8) et les panneaux (3),
**et en ce que** un profilé (11) du bas peut se fixer par clipsage sur l'un des bords verticaux d'un profilé formant dispositif d'appui (5).

2. Système selon la revendication 1, dans lequel les panneaux (3) présentent chacun une même épaisseur (d3), les profilés (10, 10', 11, 12) étant en plastique et ayant ladite cavité (C) qui présente une largeur (d2) légèrement inférieure à l'épaisseur (d3) des panneaux (3) pour permettre une fixation serrée des panneaux dans la cavité (C).

3. Système selon la revendication 1 ou 2, dans lequel les cavités (C) associées à au moins une rangée déterminée parmi lesdites rangées comprennent chacune des moyens élastiquement déformables (15 ; 16a, 16b ; 18) pour serrer les panneaux (3) de la rangée déterminée, les moyens élastiquement déformables présentant de préférence une surface biseautée ou convexe en contact avec les panneaux de la rangée déterminée.

4. Système selon la revendication 3, dans lequel les moyens élastiquement déformables comprennent un bourrelet en mousse formé sur une face interne de l'un et/ou l'autre desdites branches avant et arrière (b1, b2).

5. Système selon la revendication 3 ou 4, dans lequel les moyens élastiquement déformables comprennent une mousse compressible (15) qui est fixée sur tout ou partie de la base (B) et sur une face interne de l'un et/ou l'autre desdites branches avant et arrière (b1, b2) associées, l'épaisseur de la base étant de préférence inférieure ou égale à 4 mm.

6. Système selon l'une quelconque des revendications précédentes, dans lequel l'ossature (2) comprend des éléments structurels (4a, 4b), de préférence des montants qui s'étendent entre une extrémité inférieure et une extrémité supérieure du système, pour maintenir l'ossature (2) à distance d'une paroi (P1) du bâtiment, un deuxième espace (G) s'étendant le long de ladite face arrière de la couche de panneaux (3), tout ou partie des profilés (10, 10', 11, 12) et/ou des dispositifs d'appui (5, 6) étant fixés aux éléments structurels (4a, 4b).

7. Système selon la revendication 6, l'un des dispositifs d'appui (5) et/ou les éléments structurels (4a, 4b) étant destiné à être raccordé à un premier substrat du bâtiment, de préférence un plancher (7), par des premiers éléments des moyens de fixation, et un autre des dispositifs d'appui (6) et/ou les éléments structurels (4a, 4b) étant destiné à être raccordé à un deuxième substrat du bâtiment, de préférence un plafond, par des deuxièmes éléments des moyens de fixation.

8. Système selon l'une quelconque des revendications précédentes, comprenant une couche de matériau, de préférence à base de fibres, qui s'étend dans le premier espace (E), le long du parement externe (8) et qui est adaptée pour prévenir une perforation des panneaux (3) de la couche.

9. Système selon l'une quelconque des revendications précédentes, **caractérisé en ce que** dans des profilés (10, 10') déterminés associés à une même rangée, qui sont de préférence des profilés (10') associés à la rangée supérieure, il est prévu une cavité (C') qui débouche du côté avant ou arrière à une hauteur très faible de la base (B) correspondante, la hauteur très faible étant de préférence inférieure ou égale à 8 mm.

10. Système selon la revendication 9, dans lequel les profilés (10, 10', 11, 12) comprennent :
- des premiers profilés (11) situés à une extrémité inférieure du système et dont la cavité (C) est délimitée par une section en U en coupe transversale, adaptée pour partiellement envelopper des panneaux (3) de la rangée inférieure ;
- des deuxièmes profilés (12) situés à une extrémité supérieure du système et dont la cavité (C) est délimitée par une section en U en coupe transversale, adaptée pour partiellement envelopper des panneaux (3) de la rangée supérieure ; et
- lesdits profilés déterminés (10') qui définissent des troisièmes profilés agencés entre la rangée supérieure et une rangée adjacente, et qui comprennent d'une part une cavité (C) délimitée par une section en U adaptée pour partiellement envelopper des panneaux de la rangée adjacente à la rangée supérieure, et d'autre part une cavité (C') qui débouche du côté avant.

11. Système selon l'une quelconque des revendications précédentes, dans lequel le système d'isolation thermique (1) est destiné à s'étendre entre un plancher (7) et un plafond, et dans lequel les dispositifs d'appui rigides (5, 6) sont allongés et présentent au moins deux faces d'appui (5a, 6a) allongées horizontalement et situées à des extrémités opposées pour supporter le parement externe (8), côté plancher et côté plafond respectivement, les moyens de fixation rigide (5d) étant destinés à être ancrés au plancher et au plafond.

12. Système selon l'une quelconque des revendications précédentes, dans lequel au niveau d'une rangée déterminée de panneaux (3) parallélépipédiques de ladite couche, l'ossature (2) comprend des profilés (13) à section en H en coupe transversale qui forment chacun une jonction verticale entre deux panneaux adjacents de la rangée déterminée.

13. Procédé d'assemblage d'un système d'isolation thermique (1) pour bâtiment, dans lequel on fixe sur des profilés (10, 10', 11, 12) structurels une pluralité de panneaux isolants (3) ayant chacun une forme de plaque avec quatre côtés dont deux côtés opposés parallèles, chacun des panneaux de ladite pluralité comprenant un matériau poreux (3a) résistant à la compression et une enveloppe barrière (3b) étanche aux gaz, fermée sous vide, qui renferme le matériau poreux, le procédé comprenant les étapes consistant essentiellement à :
- fixer au moins un premier profilé (11) pour former une première extrémité fixe du système, et de préférence une extrémité inférieure ;
- fixer au moins un deuxième profilé (12) pour former une deuxième extrémité fixe du système opposée à la première extrémité fixe, et de préférence une extrémité supérieure ;
- former des rangées successives desdits panneaux (3) de façon à former une couche de panneaux, par utilisation des premier et deuxième profilés (11, 12) et d'au moins un profilé intermédiaire (10, 10') parallèle aux premier et deuxième profilés (11, 12),
- fixer de manière serrée dans des cavités (C, C') des profilés (10, 10', 11, 12) des côtés des panneaux (3), lors de la formation de chacune des rangées, de sorte que des panneaux de deux rangées adjacentes sont seulement séparés par l'épaisseur du profilé (10, 10', 11, 12) qui présente une conductivité thermique inférieure ou égale à 0,6 W m⁻¹ K⁻¹ et de préférence inférieure à 0,25 W m⁻¹ K⁻¹ ;
- fixer la couche à des dispositifs d'appui (5, 6) rigides uniquement par l'intermédiaire des premier et deuxième profilés (11, 12), de façon à définir une ossature (2) du système (1), les dispositifs d'appui (5, 6) rigides étant répartis dans deux extrémités opposées de l'ossature (2) et fixés à un substrat du bâtiment, ce grâce à quoi les dispositifs d'appui (5, 6) rigides sont placés de façon intermédiaire entre un substrat du bâtiment et lesdits premier et deuxième profilés (11, 12) et permettent de définir un espacement entre ladite couche de panneaux et une paroi (P1) du bâtiment recouverte par le système d'isolation thermique, un profilé (11) du bas se fixant par clipsage sur l'un des bords verticaux d'un profilé formant dispositif d'appui (5). ; et
- fixer, sur au moins deux faces d'appui (5a, 6a) des dispositifs d'appui (5, 6), un parement externe (8) parallèlement à la couche de panneaux (3), de façon à définir un espace (E) entre le parement externe et ladite face avant (F1), chacune des faces d'appui des dispositifs d'appui (5, 6) étant définie par une branche d'un profilé additionnel directement fixé avec un des profilés (11, 12) structurant la couche de panneaux (3), le profilé additionnel comprenant une base (5b, 6b) qui forme un des éléments d'écartement entre le parement externe (8) et les panneaux (3).

14. Procédé d'assemblage selon la revendication 13, dans lequel le premier profilé (11) est utilisé pour la formation d'une rangée inférieure formée avant les autres rangées et le deuxième profilé (12) est utilisé pour la formation d'une rangée supérieure,
et dans lequel on prévoit pour la formation des rangées :
- au moins pour former la rangée inférieure, une insertion de panneaux (3) de ladite pluralité dans une première paire de rails définis par les profilés (11, 10), l'un parmi le rail supérieur et le rail inférieur de la première paire de rails, de préférence le rail supérieur, étant monté après insertion d'au moins un panneau dans l'autre rail de ladite première paire, puis
- pour former une dernière rangée de panneaux, une insertion de panneaux (3) dans l'un puis l'autre rail d'une deuxième paire de rails (10', 12) définis par les profilés, les rails de ladite deuxième paire étant montés dans le système (1) avant les panneaux de la dernière rangée,

15. Procédé d'assemblage selon la revendication 13 ou 14, dans lequel lorsque les panneaux (3) sont de forme rectangulaire on insère des profilés (13) à section en H en coupe transversale entre deux panneaux adjacents d'une même rangée.

## Patentansprüche

1. Wärmedämmsystem (1), das dazu bestimmt ist, eine Wand (P1, P2) eines Gebäudes zu bilden oder zu bedecken, aufweisend:
- Isolationspaneele (3), die jeweils die Form einer Platte mit vier Seiten, davon zwei gegenüberliegende parallele Seiten, haben, wobei jede der Platten ein druckbeständiges poröses Material (3a) und eine gasdichte, unter Vakuum verschlossene Barrierehülle (3b), die das poröse Material einschließt, umfasst, wobei die Paneele (3) in mindestens einer Paneellage verteilt sind und dabei Paneelreihen bilden; und
- eine Tragkonstruktion (2) zum Befestigen der Paneele (3) in der Lage, so dass die Lage eine sogenannte Vorderseite (F1) auf der Seite einer Außenverkleidung (8) und eine der Vorderseite gegenüberliegende Rückseite (F2) aufweist, wobei die Tragkonstruktion eine Vielzahl von starren, zu den Reihen parallel verlaufenden und die Lage strukturierenden Profilen (10, 10', 11, 12) umfasst, die es ermöglichen, zwei parallele Seiten der Paneele (3) in den Reihen einzufassen;
wobei jedes der Profile eine Wärmeleitfähigkeit hat, die kleiner als oder gleich 0,6 W m⁻¹ K⁻¹ und bevorzugt kleiner als 0,25 W m⁻¹ K⁻¹ ist, und umfasst:
- einen Stützsteg (B), der im Wesentlichen parallel zu der durch die Reihen definierten Hauptrichtung ist und mit einer Kante (T) mindestens eines der Paneele (3) in Kontakt ist; und
- mindestens eine Aufnahme (C) zur Befestigung eines Paneels, wobei die Aufnahme zwischen einem vorderen Schenkel (b1) zur Abdeckung einer Paneelvorderseite und einem hinteren Schenkel (b2) zur Abdeckung einer Paneelrückseite begrenzt ist, wobei sich der vordere und hintere Schenkel (b1, b2) von der gleichen Seite des Stegs (B) aus erstrecken;
wobei die Tragkonstruktion (2) ferner umfasst:
- starre Befestigungsmittel (5d), die mit mindestens einem Trägermaterial des Gebäudes in Kontakt sind,
- starre Stützvorrichtungen (5, 6) mit einer bevorzugt horizontalen Erstreckungsrichtung, die mindestens zwei Stützflächen (5a, 6a) aufweisen, wobei die beiden Stützflächen, die bevorzugt parallel sind, an gegenüberliegenden Enden des Systems (1) gelegen sind, um die Außenverkleidung (8) zu tragen, wobei die Stützvorrichtungen (5, 6) Distanzelemente umfassen, die sich quer zu den Paneelen und von den Paneelen (3) beabstandet erstrecken, um einen ersten Raum (E) zwischen der Vorderseite (F1) und der Außenverkleidung (8) zu definieren,
**dadurch gekennzeichnet, dass** die starren Stützvorrichtungen (5, 6) und die starren Befestigungsmittel (5d) an zwei gegenüberliegenden Enden der Tragkonstruktion (2) verteilt sind und dazu bestimmt sind, an jedem der beiden gegenüberliegenden Enden mit einem Trägermaterial des Gebäudes verbunden zu werden, wodurch jede der Stützvorrichtungen (5, 6) zwischen einem Trägermaterial des Gebäudes und einem Profil (11, 12) liegend angeordnet werden kann und die Stützvorrichtungen (5, 6) es ermöglichen, einen Zwischenraum zwischen der mindestens einen Paneellage und der Wand (P1) des Gebäudes zu definieren,
**und dadurch, dass** die Paneele (3) in den Reihen gehalten werden, indem sie in ein Paar Schienen eingefügt werden, die durch die Profile (10, 10', 11, 12) definiert werden und von der Wand (P1) beabstandet sind,
**und dadurch, dass** die Stützflächen (5a, 6a) der Stützvorrichtungen (5, 6) stirnseitige Halter zum Befestigen der Außenverkleidung (8) definieren, wobei jede der Stützflächen durch einen Schenkel eines zusätzlichen Profils definiert wird, das direkt an einem der die Lage aus Paneelen (3) strukturierenden Profile (11, 12) befestigt ist, wobei das zusätzliche Profil einen Steg (5b, 6b) umfasst, der eines der Distanzelemente zwischen der Außenverkleidung (8) und den Paneelen (3) bildet,
**und dadurch, dass** ein Profil (11) von unten durch eine Klipverbindung an einem der senkrechten Ränder eines eine Stützvorrichtung (5) bildenden Profils befestigt werden kann.

2. System nach Anspruch 1, wobei die Paneele (3) jeweils dieselbe Dicke (d3) aufweisen, wobei die Profile (10, 10', 11, 12) aus Kunststoff sind und die Aufnahme (C) aufweisen, die eine Breite (d2) aufweist, die geringfügig kleiner als die Dicke (d3) der Paneele (3) ist, um eine Klemmbefestigung der Paneele in der Aufnahme (C) zu ermöglichen.

3. System nach Anspruch 1 oder 2, wobei die Aufnahmen (C), die mindestens einer bestimmten Reihe unter den Reihen zugeordnet sind, jeweils elastisch verformbare Mittel (15; 16a, 16b; 18) umfassen, um die Paneele (3) der bestimmten Reihe einzuklemmen, wobei die elastisch verformbaren Mittel bevorzugt eine abgeschrägte oder konvexe Oberfläche in Kontakt mit den Paneelen der bestimmten Reihe aufweisen.

4. System nach Anspruch 3, wobei die elastisch verformbaren Mittel eine Wulst aus Schaumstoff umfassen, die auf einer Innenfläche des einen und/oder des anderen vorderen und hinteren Schenkels (b1, b2) ausgebildet ist.

5. System nach Anspruch 3 oder 4, wobei die elastisch verformbaren Mittel einen komprimierbaren Schaumstoff (15) umfassen, der ganz oder teilweise auf dem Steg (B) und auf einer Innenfläche des einen und/oder des anderen zugehörigen vorderen und hinteren Schenkels (b1, b2) befestigt ist, wobei die Dicke des Stegs bevorzugt kleiner als oder gleich 4 mm ist.

6. System nach einem der vorhergehenden Ansprüche, wobei die Tragkonstruktion (2) Strukturelemente (4a, 4b), bevorzugt Pfosten, umfasst, die sich zwischen einem unteren Ende und einem oberen Ende des Systems erstrecken, um die Tragkonstruktion (2) von einer Wand (P1) des Gebäudes beabstandet zu halten, wobei sich ein zweiter Raum (G) entlang der Rückseite der Lage aus Paneelen (3) erstreckt, wobei alle oder ein Teil der Profile (10, 10', 11, 12) und/oder Stützvorrichtungen (5, 6) an den Strukturelementen (4a, 4b) befestigt sind.

7. System nach Anspruch 6, wobei eine der Stützvorrichtungen (5) und/oder die Strukturelemente (4a, 4b) dazu bestimmt sind, mit einem ersten Trägermaterial des Gebäudes, bevorzugt einem Fußboden (7), durch erste Elemente der Befestigungsmittel verbunden zu werden, und eine andere der Stützvorrichtungen (6) und/oder die Strukturelemente (4a, 4b) dazu bestimmt sind, mit einem zweiten Trägermaterial des Gebäudes, bevorzugt einer Decke, durch zweite Elemente der Befestigungsmittel verbunden zu werden.

8. System nach einem der vorhergehenden Ansprüche, umfassend eine Materialschicht, bevorzugt auf der Basis von Fasern, die sich in dem ersten Raum (E) entlang der Außenverkleidung (8) erstreckt und die geeignet ist, einer Perforation der Paneele (3) der Lage vorzubeugen.

9. System nach einem der vorhergehenden Ansprüche, **dadurch gekennzeichnet, dass** in bestimmten zu derselben Reihe gehörenden Profilen (10, 10'), die bevorzugt zu der oberen Reihe gehörende Profile (10') sind, eine Aufnahme (C') vorgesehen ist, die an der Vorder- oder Rückseite in einer sehr geringen Höhe vom entsprechenden Steg (B) mündet, wobei die sehr geringe Höhe bevorzugt kleiner als oder gleich 8 mm ist.

10. System nach Anspruch 9, wobei die Profile (10, 10', 11, 12) umfassen:
- erste Profile (11), die an einem unteren Ende des Systems gelegen sind und deren Aufnahme (C) durch einen U-förmigen Querschnitt begrenzt ist, der geeignet ist, Paneele (3) der unteren Reihe teilweise zu umhüllen;
- zweite Profile (12), die an einem oberen Ende des Systems gelegen sind und deren Aufnahme (C) durch einen U-förmigen Querschnitt begrenzt ist, der geeignet ist, Paneele (3) der oberen Reihe teilweise zu umhüllen; und
- wobei die besagten Profile (10') dritte Profile definieren, die zwischen der oberen Reihe und einer benachbarten Reihe angeordnet sind und die zum einen eine Aufnahme (C), die durch einen U-förmigen Querschnitt begrenzt wird, der geeignet ist, Paneele der zur oberen Reihe benachbarten Reihe teilweise zu umhüllen, und zum anderen eine Aufnahme (C'), die an der Vorderseite mündet, umfassen.

11. System nach einem der vorhergehenden Ansprüche, wobei das Wärmedämmsystem (1) dazu bestimmt ist, sich zwischen einem Fußboden (7) und einer Decke zu erstrecken, und bei dem die starren Stützvorrichtungen (5, 6) langgestreckt sind und mindestens zwei Stützflächen (5a, 6a) aufweisen, die horizontal langgestreckt sind und an gegenüberliegenden Enden gelegen sind, um die Außenverkleidung (8) jeweils fußbodenseitig bzw. deckenseitig zu tragen, wobei die starren Befestigungsmittel (5d) dazu bestimmt sind, am Fußboden und an der Decke verankert zu werden.

12. System nach einem der vorhergehenden Ansprüche, wobei die Tragkonstruktion (2) auf Höhe einer bestimmten Reihe von parallelepipedischen Paneelen (3) der Lage Profile (13) mit H-Querschnitt umfasst, die jeweils eine vertikale Verbindung zwischen zwei benachbarten Paneelen der bestimmten Reihe bilden.

13. Verfahren zur Montage eines Wärmedämmsystems (1) für ein Gebäude, wobei man an strukturierenden Profilen (10, 10', 11, 12) eine Vielzahl von Isolationspaneelen (3) befestigt, die jeweils die Form einer Platte mit vier Seiten, davon zwei gegenüberliegende parallele Seiten, haben, wobei jedes der Paneele der Vielzahl ein druckbeständiges poröses Material (3a) und eine gasdichte, unter Vakuum verschlossene Barrierehülle (3b), die das poröse Material einschließt, umfasst, wobei das Verfahren die Schritte umfasst, die im Wesentlichen darin bestehen:
- Befestigen mindestens eines ersten Profils (11), um ein erstes festes Ende des Systems und bevorzugt ein unteres Ende zu bilden;
- Befestigen mindestens eines zweiten Profils (12), um ein zweites festes Ende des Systems zu bilden, das gegenüberliegend zum ersten festen Ende ist, und bevorzugt ein oberes Ende zu bilden;
- Bilden von aufeinanderfolgenden Reihen aus den Paneelen (3), so dass eine Paneellage gebildet wird, durch Verwenden der ersten und zweiten Profile (11, 12) und mindestens eines Zwischenprofils (10, 10'), das parallel zu den ersten und zweiten Profilen (11, 12) ist,
- Festes Fixieren der Seiten der Paneele (3) in den Aufnahmen (C, C') der Profile (10, 10', 11, 12) während der Bildung jeder Reihe, so dass Paneele zweier benachbarter Reihen nur durch die Dicke des Profils (10, 10', 11, 12) voneinander getrennt sind, das eine Wärmeleitfähigkeit aufweist, die kleiner als oder gleich 0,6 W m⁻¹ K⁻¹ und bevorzugt kleiner als 0,25 W m⁻¹ K⁻¹ ist;
- Befestigen der starren Stützvorrichtungen (5, 6) an der Lage nur mittels der ersten und zweiten Profile (11, 12), um eine Tragkonstruktion (2) des Systems (1) zu definieren, wobei die starren Stützvorrichtungen (5, 6) an zwei gegenüberliegenden Enden der Tragkonstruktion (2) verteilt sind und an einem Trägermaterial des Gebäudes befestigt sind, wodurch die starren Stützvorrichtungen (5, 6) zwischen einem Trägermaterial des Gebäudes und den ersten und zweiten Profilen (11, 12) liegend angeordnet sind und es ermöglichen, einen Zwischenraum zwischen der Paneellage und einer Wand (P1) des Gebäudes zu definieren, die von dem Wärmedämmsystem bedeckt ist, wobei ein Profil (11) von unten durch eine Klipverbindung an einem der senkrechten Ränder eines eine Stützvorrichtung (5) bildenden Profils befestigt werden kann; und
- Befestigen einer Außenverkleidung (8) an mindestens zwei Stützflächen (5a, 6a) der Stützvorrichtungen (5, 6) parallel zu der Paneellage (3), so dass ein Raum (E) zwischen der Außenverkleidung und der Vorderseite (F1) definiert wird, wobei jede der Stützflächen der Stützvorrichtungen (5, 6) durch einen Schenkel eines zusätzlichen Profils definiert wird, das direkt an einem der die Lage aus Paneelen (3) strukturierenden Profile (11, 12) befestigt ist, wobei das zusätzliche Profil einen Steg (5b, 6b) umfasst, der eines der Distanzelemente zwischen der Außenverkleidung (8) und den Paneelen (3) bildet.

14. Montageverfahren nach Anspruch 13, wobei das erste Profil (11) zum Bilden einer unteren Reihe verwendet wird, die vor den anderen Reihen gebildet wird, und das zweite Profil (12) zum Bilden einer oberen Reihe verwendet wird,
und wobei man zum Bilden der Reihen vorsieht:
- mindestens zum Bilden der unteren Reihe ein Einfügen von Paneelen (3) der Vielzahl in ein erstes Paar Schienen, die durch die Profile (11, 10) definiert werden, wobei die eine der oberen und unteren Schienen des ersten Schienenpaars, bevorzugt die obere Schiene, nach dem Einfügen mindestens eines Paneels in die andere Schiene des ersten Paares montiert wird, dann
- zum Bilden einer letzten Reihe von Paneelen ein Einfügen von Paneelen (3) in die eine, dann die andere Schiene eines zweiten Paars Schienen (10', 12), die durch die Profile definiert werden, wobei die Schienen des zweiten Paars im System (1) vor den Paneelen der letzten Reihe montiert werden.

15. Montageverfahren nach Anspruch 13 oder 14, wobei, wenn die Paneele (3) rechteckig sind, Profile (13) mit H-förmigem Querschnitt zwischen zwei benachbarte Paneele derselben Reihe eingefügt werden.

## Claims

1. Heat insulation system (1) intended to form or cover a wall (P1, P2) of a building, comprising:
- insulation panels (3) with each one have the form of a plate with four sides of which two opposite parallel sides, with each one of the panels comprising a compression-resistant porous material (3a) and a gas-tight barrier casing (3b), vacuum sealed, which encloses the porous material, with the panels (3) being distributed in at least one layer of panels by forming rows of panels; and
- a framework (2) for fastening the panels (3) in said layer, in such a way that said layer has a so-called front surface (F1) on the side of an outer facing (8) and a so-called rear surface (F2) opposite the front surface, with the framework comprising a plurality of rigid profile elements (10, 10', 11, 12) parallel to the rows and structuring the layer, which make it possible to border two parallel sides of the panels (3) in the rows; with each one of the profile elements having a heat conductivity less than or equal to 0.6 W m⁻¹ K⁻¹ and preferably less than 0.25 W m⁻¹ K⁻¹, and comprising:
- a bearing base (B) substantially parallel to the general direction defined by the rows, in contact with a side surface (T) of at least one of the panels (3); and
- at least one cavity (C) for fastening a panel, said cavity being delimited between a front branch (b1) for covering a front panel surface and a rear branch (b2) for covering a rear panel surface, said front and rear branches (b1, b2) extending from the same side from the base (B);
with the framework (2) further comprising:
- means of rigid fastening (5d) in contact with at least one substrate of the building,
- rigid bearing devices (5, 6), preferably having a horizontal direction of extension, which have at least two bearing surfaces (5a, 6a), the two bearing surfaces which are preferably parallel being located at opposite ends of the system (1) in order to support the outer facing (8), with the bearing devices (5, 6) comprising spacer elements extending transversally with respect to the panels and remote from the panels (3) in order to define a first space (E) between said front surface (F1) and the outer facing (8),
**characterised in that** the rigid bearing devices (5, 6) and the means of rigid fastening (5d) are distributed in two opposite ends of the framework (2), intended to be connected to a substrate of the building to each one of said two opposite ends, this thanks to which each one of the bearing devices (5, 6) can be arranged in an intermediate manner between a substrate of the building and a profile element (11, 12) and said bearing devices (5, 6) make it possible to define a spacing between said at least one layer of panels and said wall (P1) of the building,
and **in that** the panels (3) are maintained in the rows by being inserted into a pair of rails defined by the profile elements (10, 10', 11, 12) and remote from said wall (PI), and **in that** the bearing surfaces (5a, 6a) of the bearing devices (5, 6) define front supports for the fastening of the outer facing (8), with each one of the bearing surfaces being defined by a branch of an additional profile element directly fastened with one of the profile elements (11, 12) structuring the layer of panels (3), with the additional profile element comprising a base (5b, 6b) which forms one of the spacer elements between the outer facing (8) and the panels (3),
and **in that** a profile element (11) of the bottom can be fastened by snap-fitting onto one of the vertical edges of a profile element forming bearing device (5).

2. System according to claim 1, wherein the panels (3) each have the same thickness (d3), with the profile elements (10, 10', 11, 12) being made of plastic and having said cavity (C) which has a width (d2) slightly less than the thickness (d3) of the panels (3) in order to allow for a tight fastening of the panels in the cavity (C).

3. System according to claim 1 or 2, wherein the cavities (C) associated with at least one row determined by said rows each comprise elastically deformable means (15; 16a, 16b; 18) to tightened the panels (3) of the determined row, with the elastically deformable means preferably having a bevelled or convex surface in contact with the panels of the determined row.

4. System according to claim 3, wherein the elastically deformable means comprise a foam beading formed on the inner surface of one and/or the other of said front and rear branches (b1, b2).

5. System according to claim 3 or 4, wherein the elastically deformable means include a compressible foam (15) which is fastened over all or a portion of the base (B) and on an inner surface of one and/or the other of said associated front and rear branches (b1, b2), with the thickness of the base preferably being less than or equal to 4 mm.

6. System according to any preceding claim, wherein the framework (2) comprises structural elements (4a, 4b), preferably studs that extend between a lower end and an upper end of the system, in order to maintain the framework (2) remote from a wall (P1) of the building, a second space (G) extending along said rear surface of the layer of panels (3), with all or a portion of the profile elements (10, 10', 11, 12) and/or of the bearing devices (5, 6) being fastened to the structural elements (4a, 4b).

7. System according to claim 6, with one of the bearing devices (5) and/or the structural elements (4a, 4b) being intended to be connected to a first substrate of the building, more preferably a floor (7), by first elements of the means for fastening, and another of the bearing devices (6) and/or the structural elements (4a, 4b) being intended to be connected to a second substrate of the building, more preferably a ceiling, by second elements of the means for fastening.

8. System according to any preceding claim, comprising a layer of material, more preferably with a fibre base, which extends in the first space (E), along the outer facing (8) and which is suitable for preventing a perforation of the panels (3) of the layer.

9. System according to any preceding claim, **characterised in that** in determined profile elements (10, 10') associated with the same row, which are preferably profile elements (10') associated with the upper row, a cavity (C') is provided that opens from the front or rear side at a very low height from the corresponding base (B), with the very low height being more preferably less than or equal to 8 mm.

10. System according to claim 9, wherein the profile elements (10, 10', 11, 12) include:
- first profile elements (11) located at a lower end of the system and of which the cavity (C) is delimited by a U-shaped section as a transversal section, suitable for partially surrounding panels (3) of the lower row;
- second profile elements (12) located at an upper end of the system and of which the cavity (C) is delimited by a U-shaped section as a transversal section, suitable for partially surrounding panels (3) of the upper row; and
- the determined profile elements (10') which define third profile elements arranged between the upper row and an adjacent row, and which include on the one hand a cavity (C) delimited by a U-shaped section suitable for partially surrounding panels of the row adjacent to the upper row, and on the other hand a cavity (C') which opens from the front side.

11. System according to any preceding claim, wherein the heat insulation system (1) is intended to extend between a floor (7) and a ceiling, and wherein the rigid bearing devices (5, 6) are extended and have at least two horizontally extended bearing surfaces (5a, 6a) and located at opposite ends in order to support the outer facing (8), on the floor side and ceiling side respectively, with the means of rigid fastening (5d) being intended to be anchored to the floor and to the ceiling.

12. System according to any preceding claim, wherein on a determined row of parallelepiped panels (3) of said layer, the framework (2) comprises profile elements (13) with an H-shaped section as a transversal section that each form a vertical junction between two adjacent panels of the determined row.

13. Method for assembling a heat insulation system (1) for a building, wherein on structural profile elements (10, 10', 11, 12) a plurality of insulation panels (3) are fastened, each having the form of a plate with four sides of which two opposite parallel sides, with each one of the panels of said plurality comprising a compression-resistant porous material (3a) and a gas-tight barrier casing (3b), vacuum sealed, that encloses the porous material, with the method comprising the steps consisting substantially in:
- fastening at least one first profile element (11) in order to form a first fixed end of the system, and preferably a lower end;
- fastening at least one second profile element (12) in order to form a second fixed end of the system opposite the first fixed end, and preferably an upper end;
- forming successive rows of said panels (3) in such a way as to form a layer of panels, through the use of the first and second profile elements (11, 12) and of at least one intermediate profile element (10, 10') parallel to the first and second profile elements (11, 12),
- tightly fastening in cavities (C, C') profile elements (10, 10', 11, 12) of the sides of panels (3), during the forming of each one of the rows, in such a way that panels of two adjacent rows are separated only by the thickness of the profile element (10, 10', 11, 12) which has a heat conductivity less than or equal to 0.6 W m⁻¹ K⁻¹ and preferable less than 0.25 W m⁻¹ K⁻¹;
- fastening the layer to rigid bearing devices (5, 6) only by the intermediary of the first and second profile elements (11, 12), in such a way as to define a framework (2) of the system (1), with the rigid bearing devices (5, 6) being distributed in two opposite ends of the framework (2) and fastened to a substrate of the building, this thanks to which the rigid bearing devices (5, 6) are placed in an intermediate manner between a substrate of the building and said first and second profile elements (11, 12) and make it possible to define a spacing between said layer of panels and a wall (PI) of the building covered by the heat insulation system, a profile element (11) of the bottom being fastened via snap-fitting on one of the vertical edges of a profile element forming a bearing device (5); and
- fastening, on at least two bearing surfaces (5a, 6a) of the bearing devices (5, 6), an outer facing (8) parallel to the layer of panels (3), in such a way as to define a space (E) between the outer facing and said front surface (F1), with each one of the bearing surfaces of the bearing devices (5, 6) being defined by a branch of an additional profile element directly fastened with one of the profile elements (11, 12) structuring the layer of panels (3), with the additional profile element comprising a base (5b, 6b) which forms one of the spacer elements between the outer facing (8) and the panels (3).

14. Method for assembly according to claim 13, wherein the first profile element (11) is used for the forming of a lower row formed before the other rows and the second profile element (12) is used for the forming of an upper row,
and wherein the following is provided for the forming of rows:
- at least for forming the lower row, an insertion of panels (3) of said plurality in a first pair of rails defined by the profile elements (11, 10), with one among the upper rail and the lower rail of the first pair of rails, more preferably the upper rail, being mounted after insertion of at least one panel in the other rail of said first pair, then
- in order to form a last row of panels, an insertion of panels (3) in one then the other rail of a second pair of rails (10', 12) defined by the profile elements, with the rails of said second pair being mounted in the system (1) before the panels of the last row,

15. Method for assembly according to claim 13 or 14, wherein when the panels (3) have a rectangular shape profile elements (13) with an H-shaped section as a transversal section are inserted between two adjacent panels of the same row.
